# EUROPÄISCHE PATENTSCHRIFT

(11) **EP 3 512 915 B1**
(45) Veröffentlichungstag und Bekanntmachung des Hinweises auf die Patenterteilung: **14.07.2021**
(21) Anmeldenummer: 17762060.6
(22) Anmeldetag: 23.08.2017
(51) Int. Cl.: C09D 4/00, C08G 59/42, C09D 163/00, C08L 63/00

(54) **LICHTFIXIERBARE VERGUSSMASSE UND VERFAHREN ZUM SELEKTIVEN VERGUSS VON SUBSTRATEN/BAUTEILEN UNTER VERWENDUNG DER MASSEN**
LIGHT-FIXABLE CASTING COMPOUND AND METHOD FOR SELECTIVE CASTING SUBSTRATES/COMPONENTS USING SAID COMPOUND
MATIÈRE DE SCELLEMENT POUVANT ÊTRE FIXÉE À LA LUMIÈRE ET PROCÉDÉ DE SCELLEMENT SÉLECTIF DE SUBSTRATS/COMPOSANTS UTILISANT LADITE MATIÈRE

(30) Priorität: 13.09.2016 DE 102016117183
(43) Veröffentlichungstag der Anmeldung: 24.07.2019
(73) Patentinhaber: Delo Industrieklebstoffe GmbH & Co. KGaA, 86949 Windach (DE)
(72) Erfinder: REICHVILSER, Moritz, 81377 München (DE); STÄRK, Angela, 86949 Windach (DE); KÖNIGER, Tobias, 86959 Windach (DE); KMETH, Ralf, 86343 Königsbrunn (DE)
(74) Vertreter: Prinz & Partner mbB
(86) Internationale Anmeldenummer: PCT/EP2017/071202
(87) Internationale Veröffentlichungsnummer: WO 2018/050413

(56) Entgegenhaltungen:
- WO-A1-2015/094629
- US-A1- 2005 026 069

## Beschreibung

### GEBIET DER ERFINDUNG

Die Erfindung betrifft eine warmhärtende und lichtfixierbare, bei Raumtemperatur flüssige Masse auf Epoxidbasis, insbesondere zur Fixierung und/oder Verkapselung von Bauteilen, sowie ein Verfahren zur Verkapselung von Bauteilen unter Verwendung der Masse.

Insbesondere betrifft die vorliegende Erfindung warmhärtende Hochzuverlässigkeitsmassen auf Basis von Epoxidharzen und einem Härter, die zusätzlich wenigstens eine strahlungshärtende Verbindung und einen Photoinitiator für die radikalische Polymerisation umfassen. Die erfindungsgemäßen Massen lassen sich zunächst durch Bestrahlung fixieren und anschließend warm härten. Durch die hohe Konturstabilität die bereits im Bestrahlungsschritt erreicht wird, eigenen sich diese Massen besonders für den Einsatz in schnellen Vergussprozessen. Nach dem Warmhärtungsschritt zeichnen sich die erfindungsgemäßen Massen durch eine hohe mechanische Zuverlässigkeit, einen niedrigen thermischen Ausdehnungskoeffizienten und insbesondere eine hohe Medienbeständigkeit aus. Die Erfindung betrifft ferner ein Verfahren in dem die Massen in selektiven Vergussanwendungen zum Einsatz kommen.

### TECHNISCHER HINTERGRUND

Die Härtung von Epoxidharzen durch Anhydride ist im Stand der Technik seit langem bekannt. Die US 5 189 080 offenbart gefüllte Massen auf Basis von Epoxidharzen, Anhydriden und einem Beschleuniger. Hohe Füllgrade an amorphem Quarz ermöglichen dabei in den ausgehärteten Massen niedrige thermische Ausdehnungskoeffizienten zu erzielen. Gleichzeitig zeichnen sich derartige Materialien durch eine hohe Beständigkeit und einen hohen Glasübergangspunkt aus. Anhydridisch gehärtete Epoxidmassen kommen aus diesen Gründen bevorzugt in Verguss-, Klebe- oder Beschichtungsanwendungen zum Einsatz in denen eine hohe Zuverlässigkeit gefordert ist.

Vor allem im Elektronikbereich sind niedrige thermische Ausdehnungskoeffizienten wichtig, um im Falle von schwankenden thermischen Belastungen den Spannungseintrag in das Bauteil gering zu halten. Der Chipverguss im Leistungselektronikbereich stellt daher ein typisches Anwendungsgebiet anhydridisch härtender Epoxidmassen dar. Die DE 19 820 216 A1 beschreibt den Einsatz derartiger Systeme u.a. für warmhärtende Glob-Top Applikationen. Nachteilig bei Chip-Vergussanwendungen auf Platinen ist jedoch, dass die Massen nach dem Dosieren auf das jeweilige Bauteil sowie bei der Warmhärtung zum Verfließen neigen. Insbesondere bei einer hohen Integrationsdichte kann es dazu kommen, dass einzelne Bauteile, Kontakte oder Drähte unerwünscht mit der Vergussmasse in Berührung kommen und umgekehrt zu schützende Bereiche nicht vollständig von der Masse bedeckt sind.

Die US 4 732 952 A1 beschreibt zweistufig härtbare Massen auf Basis von Polyepoxiden und (Meth)Acrylsäureanhydriden, die zusätzlich einen Photoinitiator für die radikalische Polymerisation enthalten. In entsprechenden Massen können zunächst die ungesättigten Gruppen durch Bestrahlung radikalisch polymerisiert werden. Damit wird ein B-stage Zustand erreicht in dem die Fließfähigkeit eingeschränkt ist. Anschließend kann in einem zweiten Warmhärtungsschritt der verbleibende Epoxidanteil durch die Anhydridgruppierungen in einer Polyadditionsreaktion gehärtet werden. Die in US 4 732 952 A1 beschriebenen (Meth)Acrylsäureanhydride sind jedoch ausschließlich difunktionell. Für eine ausreichende Fixierung sind hohe Anteile der (Meth)Acrylatkomponente und lange Bestrahlungszeiten nötig.

Die WO 2015/094 629 A1 beschreibt Epoxidharzmassen, die neben der Epoxidkomponente ein (meth)acrylathaltiges Polyol, einen Initiator für die radikalische Polymerisation und einen Härter enthalten. Die beschriebenen Härter sind dabei aus der Gruppe der Amine und Anhydride ausgewählt. Die beispielhaften (Meth)Acrylatverbindungen ermöglichen eine Dualhärtung der Massen und dienen gleichzeitig der Flexibilisierung. Nachteilig bei diesem Ansatz ist jedoch, dass die beschriebenen (Meth)Acrylate ausschließlich difunktionell sind und daher für eine Fixierung mit Licht hohe Konzentrationen nötig sind, die in der Lichthärtung zu einer Phasenseparation führen. Hohe Anteile an (Meth)Acrylaten auf Polyolbasis wirken sich ferner negativ auf die Zuverlässigkeit der Massen bei thermischer Belastung sowie die Beständigkeit gegenüber Medien wie Lösungsmitteln, Kraft- oder Schmierstoffen aus.

Die US 5 565 499 A1 beschreibt lichtfixierbare, durch Anhydride härtbare Epoxidharzmassen zum Einsatz in der Faserwickelung. Diese enthalten bevorzugt hohe Anteile an ungesättigten, strahlungshärtenden Verbindungen wie Acrylate. Während der Wickelung werden die Massen durch Bestrahlung fixiert um ein Verfließen zu verhindern. Durch die hohen Acrylatanteile enthalten die Massen zwingend ein Peroxid, um in der abschließenden Warmhärtung eine vollständige Härtung der ungesättigten Verbindungen zu gewährleisten.
Aus der US 2005/0026069 A1 ist eine dualhärtende Masse zum Verfüllen von Durchkontaktierungen in Leiterplatten bekannt. Die Masse umfasst ein oder mehrere flüssige Epoxidharze, ein oder mehrere Monomere, ein oder mehrere Photoinitiatoren und ein oder mehrere Härter für das Epoxidharz. Als Monomere können Acrylate eingesetzt werden. Die Masse wird zunächst mit ultravioletten Licht bestrahlt, um die Öffnungen der Durchkontaktierung zu verschließen. Anschließend wird die Masse bei erhöhter Temperatur ausgehärtet.

Im Stand der Technik ist weiterhin bekannt, dass Epoxidharzmassen, die mit latenten Härtern auf Basis von Imidazolen ausgehärtet wurden, eine gute Haftung auch auf schwer zu fügenden Materialen wie bspw. LCP (Liquid Crystal Polymer), insbesondere nach Temperatur- und Feuchtebelastung, zeigen. Diese Massen besitzen jedoch relativ hohe thermische Ausdehnungskoeffizienten und sind damit für Vergussanwendungen im Elektronikbereich ungeeignet.

Für die Verkapselung von Elektronikbauteilen gehören Dam & Fill-Prozesse und Glob Top-Vergüsse auf Basis von Epoxidharzmassen zum Stand der Technik. Daneben kommen vielfach Moldprozesse zum Einsatz. Mit zunehmender Integrationsdichte und immer komplexeren Bauteilgeometrien besteht bei Verkapselungsprozessen jedoch der Bedarf nach Anwendungen, die neben einer Materialeinsparung einen selektiven Verguss durch ausschließliche Verkapselung bestimmter ausgewählter Bauteile ermöglichen.

Die US 2007/0289129 A1 beschreibt ein Verfahren, in dem einzelne Elemente oder ganze Baugruppen zunächst mit einem Damm umgeben werden und dieser anschließend mit einem Füllmaterial aufgefüllt wird. Die Aushärtung des Füllmaterials erfolgt dabei in einem nachgeschalteten Warmhärteschritt. Der Prozess kann iterativ mit unterschiedlichen Dammhöhen ausgeführt werden. Nachteilig dabei ist jedoch der hohe Platzbedarf unterschiedlicher Damm-Strukturen auf einer Platine. Hierzu müssen beim Entwurf der Leiterplatte Bereiche freigehalten werden, was die funktionalen und räumlichen Gestaltungsmöglichkeiten und erzielbaren Integrationsdichten erheblich einschränkt. Im Falle einer hohen Bestückungsdichte, kann es ferner zur unerwünschten Benetzung von Bauteilen mit der Vergussmasse kommen.

Die DE 10 2014 105 961 A1 beschreibt ein Verfahren für den höhenselektiven Verguss von elektronischen Bauteilen auf Leiterplatten. Dazu wird zunächst ein Damm um das gewünschte Bauteil mit einem lichthärtenden Material erzeugt. In einem zweiten Schritt wird der Damm mit einem Vergussmaterial unter verminderten Druck befüllt und in einem weiteren Warmhärteschritt ausgehärtet. Nachteilig bei diesem Verfahren ist die Verwendung zweier unterschiedlicher Materialien für den höhenselektiven Verguss. UV-härtende Massen auf Basis von (Meth)Acrylaten erreichen dabei typischerweise keine hohe Beständigkeit unter andauernder Temperatur- und Feuchteeinwirkung. Ferner kann es durch die Kombination inkompatibler Massen bei thermischer Belastung zu einer unterschiedlichen Ausdehnung des Damm- und Füllmaterials kommen. Dadurch entstehen Spannungen am Bauteil, die zum Abreißen dünner Bonddrähte führen können.

### ZUSAMMENFASSUNG DER ERFINDUNG

Der vorliegenden Erfindung liegt die Aufgabe zu Grunde, warmhärtende Epoxidharzsysteme für selektive Vergussanwendungen bereitzustellen, die sich zuverlässig verarbeiten lassen und während der Aushärtung formstabil bleiben. Die gehärteten Massen sollen ferner eine hohe mechanische Zuverlässigkeit, einen niedrigen thermischen Ausdehnungskoeffizienten und insbesondere hohe Beständigkeit aufweisen.

Die Aufgabe wird durch warmhärtende und lichtfixierbare, bei Raumtemperatur flüssige Massen auf Epoxidbasis gelöst, die mindestens eine epoxidhaltige Verbindung (A) mit mindestens zwei Epoxidgruppen, mindestens einen Härter (B) für die epoxidhaltige Verbindung, wahlweise einen Beschleuniger (C), mindestens eine strahlungshärtende Komponente (D), mindestens einen Photoinitiator (E) für die radikalische Polymerisation und mindestens einen Füllstoff (F) umfassen. Die strahlungshärtende Verbindung (D) umfasst mindestens ein mindestens trifunktionelles (Meth)Acrylat. Die Masse enthält die strahlungshärtende Komponente (D) in einem Anteil von 0,5 bis 5 Gew.-%, bezogen auf das Gesamtgewicht der Masse.

Als Massen auf Epoxidbasis werden solche Massen bezeichnet, bei denen die wenigstens eine epoxidhaltige Verbindung (A) den Hauptanteil der härtbaren Komponenten (A) und (D) der Masse bildet. Die epoxidhaltige Verbindung liegt also in einer Menge vor, die größer ist als die Menge der strahlungshärtenden Komponente (D). Die Verwendung eines mindestens trifunktionellen (Meth)Acrylats als Komponente (D) in Verbindung mit dem Photoinitiator (E) in Massen auf Epoxidbasis erlaubt dabei, die Massen nach Auftrag auf ein Substrat innerhalb kurzer Zeit durch Bestrahlung in einen Zustand zu fixieren, in dem die bestrahlten Massen auch beim Erwärmen auf hohe Temperaturen formstabil bleiben und kein Verfließen auftritt. Die eigentliche Aushärtung der Epoxidharzkomponente erfolgt im Warmhärteschritt. Erst durch die Warmhärtung werden Eigenschaften wie eine hohe mechanische Zuverlässigkeit, niedrige thermische Ausdehnungskoeffizienten und hohe Beständigkeit aufgebaut. Der Einsatz eines mindestens trifunktionellen (Meth)Acrylats erlaubt schnelle Fixierzeiten bei gleichzeitig niedrigen Massenanteilen der strahlungshärtenden Komponente (D). Somit wirkt sich in den erfindungsgemäßen Massen die Anwesenheit der strahlungshärtenden Komponente (D) nicht negativ auf die hohe Zuverlässigkeit der Epoxidmasse aus, da die Komponente (D) nur in niedrigen Konzentrationen zum Einsatz kommt.

### BESCHREIBUNG BEVORZUGTER AUSFÜHRUNGSFORMEN

Die Erfindung wird im Folgenden anhand von bevorzugten Ausführungsformen ausführlich und beispielhaft beschrieben, die jedoch nicht in einem einschränkenden Sinn verstanden werden sollten.

Erfindungsgemäß werden bei Raumtemperatur flüssige Massen auf Epoxidbasis bereitgestellt, die mindestens eine epoxidhaltige Verbindung (A), mindestens einen Härter (B), wahlweise einen Beschleuniger (C), mindestens eine strahlungshärtende Verbindung (D), einen Photoinitiator (E) für die radikalische Polymerisation und mindestens einen Füllstoff (F) umfassen. Darüber hinaus können in den Massen weitere Zusatzstoffe (G) enthalten sein.

Die erfindungsgemäßen Massen können in Abhängigkeit von prozess- oder anwendungsspezifischen Anforderungen sowohl als Einkomponentenmassen, als auch als Zwei- oder Mehrkomponentenmassen formuliert werden. "Einkomponentig" oder "Einkomponentenmasse" bedeutet, dass die genannten Komponenten zusammen in einer gemeinsamen Formulierung vorliegen, also nicht getrennt voneinander gelagert sind. Im Falle von Zweikomponentenformulierungen werden insbesondere die Epoxidkomponente (A) und die reaktive Härterkomponente (B) separiert und erst bei der Verarbeitung der Masse zusammengeführt und gemischt.

Zweikomponentenmassen weisen insbesondere bei hohem Verbrauch Vorteile auf und zeichnen sich ferner durch eine erhöhte Raumtemperaturlagerstabilität aus.

Die Zusammensetzung der einzelnen Komponenten (A) bis (G) der erfindungsgemäßen Massen wird nachfolgend im Einzelnen erläutert. Die für die Komponenten (A) bis (G) verwendeten Stoffe können aus den angegebenen Zusammensetzungen ausgewählt und ohne Einschränkung miteinander kombiniert werden.

### Komponente (A): Epoxidhaltige Verbindung

Die epoxidhaltige Verbindung (A) in den erfindungsgemäßen Massen umfasst mindestens eine mindestens difunktionelle epoxidhaltige Verbindung. Mindestens "difunktionell" bedeutet, dass die epoxidhaltige Verbindung mindestens zwei Epoxidgruppen enthält. Die Komponente (A) kann beispielsweise cycloaliphatische Epoxide, aromatische und aliphatische Glycidylether, Glycidylester oder Glycidylamine und Mischungen davon umfassen.

Difunktionelle cycloaliphatische Epoxidharze sind im Stand der Technik bekannt und beinhalten Verbindungen, die sowohl eine cycloaliphatische Gruppe als auch mindestens zwei Oxiranringe tragen. Beispielhafte Vertreter sind 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-6-methylcyclohexancarboxylat, Vinylcyclohexendioxid, Bis(3,4-Epoxycyclohexylmethyl)adipat, Dicyclopentadiendioxid, 1,2-Epoxy-6-(2,3-epoxypropoxy)hexahydro-4,7-methanindan. Bevorzugt kommt 3,4-Epoxycyclohexylmethyl-3',4'-epoxycylohexylcarboxylat zum Einsatz.

Aromatische Epoxidharze können in den erfindungsgemäßen Massen ebenso genutzt werden. Beispiele für aromatische Epoxidharze sind Bisphenol-A-Epoxidharze, Bisphenol-F-Epoxidharze, Phenol-Novolak-Epoxidharze, Cresol-Novolak-Epoxidharze, Biphenylepoxidharze, 4,4'-Biphenylepoxidharze, Divinylbenzoldioxid, 2-Glycidylphenylglycidylether, Naphthalindioldiglycidylether, Glycidylether von Tris(hydroxyphenyl)-methan, Glycidylether von Tris(hydroxyphenyl)-ethan. Ferner können auch alle vollständig oder teilweise hydrierten Analoga aromatischer Epoxidharze eingesetzt werden.

Auch mit epoxidhaltigen Gruppen substituierte Isocyanurate und andere heterocyclische Verbindungen können in den erfindungsgemäßen Massen eingesetzt werden. Beispielhaft seien Triglycidylisocyanurat und Monoallyldiglycidylisocyanurat genannt.

Außerdem können auch polyfunktionelle Epoxidharze aller genannten Harzgruppen, zäh elastifizierte Epoxidharze sowie Gemische verschiedener Epoxidharze in den erfindungsgemäßen Massen eingesetzt werden.

Eine Kombination mehrerer epoxidhaltiger Verbindungen, von denen mindestens eine di- oder höherfunktionell ist, ist ebenfalls im Sinne der Erfindung.

Beispiele kommerziell erhältlicher epoxidhaltiger Verbindungen (A) sind unter den Handelsnamen CELLOXIDE™ 2021P, CELLOXIDE™ 8000 von der Firma Daicel Corporation, Japan, oder EPIKOTE™ RESIN 828 LVEL, EPIKOTE™ RESIN 166, EPIKOTE™ RESIN 169 von der Firma Momentive Specialty Chemicals B.V., Niederlande, oder Epilox™-Harze der Produktreihen A, T und AF der Firma Leuna Harze, Deutschland, oder EPICLON™ 840, 840-S, 850, 850-S, EXA850CRP, 850-LC der Firma DIC K.K., Japan, verfügbar.

Die Komponente (A) liegt in der erfindungsgemäßen Masse, bezogen auf das Gesamtgewicht der Masse, bevorzugt in einem Anteil von 2-60 Gew.-%, weiter bevorzugt 4-30 Gew.-% und besonders bevorzugt von 5-20 Gew.-% vor.

### Komponente (B): Härter

Der Härter (B) umfasst vorzugsweise wenigstens eine Verbindung, die aus der aus Carbonsäureanhydriden, stickstoffhaltigen Verbindungen, Verbindungen mit zwei oder mehr phenolischen Hydroxylgruppen und Aminophenolen sowie Mischungen davon bestehenden Gruppe ausgewählt ist. Bevorzugt umfasst der Härter ein Carbonsäureanhydrid.

Das Carbonsäureanhydrid ist vorzugsweise ein Anhydrid einer mehrprotonigen Carbonsäure und nicht in besonderer Weise eingeschränkt, solange es mindestens eine Anhydridgruppe aufweist.

Besonders bevorzugt umfasst der Härter (B) mindestens ein Carbonsäureanhydrid, das aus der Gruppe bestehend aus den Anhydriden zweiprotoniger Carbonsäuren und aromatischer vierprotoniger Carbonsäuren ausgewählt ist, sowie Mischungen davon.

Spezifische Beispiele für Anhydride, die in den vorliegenden Massen als Härter eingesetzt werden können, umfassen die Anhydride zweiprotoniger Säuren, wie zum Beispiel Phthalsäureanhydrid (PSA), Bernsteinsäureanhydrid, Octenylbernsteinsäureanhydrid (OSA), Pentadodecenylbernsteinsäureanhydrid und andere Alkenylbernsteinsäureanhydride, Maleinsäureanhydrid (MA), Itaconsäureanhydrid (ISA), Tetrahydrophthalsäureanhydrid (THPA), Hexahydrophthalsäureanhydrid (HHPA), Methyltetrahydrophthalsäureanhydrid (MTHPA), Methylhexahydrophthalsäureanhydrid (MHHPA), Nadinsäureanhydrid, 3,6-Endomethylentetrahydrophthalsäureanhydrid, Methyl-endomethylentetrahydrophthalsäureanhydrid (METH, NMA), Tetrabromphthalsäureanhydrid und Trimellitsäureanhydrid, sowie die Anhydride aromatischer vierprotoniger Säuren, wie zum Beispiel Biphenyltetracarbonsäuredianhydride, Naphthalintetracarbonsäuredianhydride, Diphenylethertetracarbonsäuredianhydride, Butantetracarbonsäuredianhydride, Cyclopentantetracarbonsäuredianhydride, Pyromellitsäureanhydride und Benzophenontetracarbonsäuredianhydride. Diese Verbindungen können allein oder in Kombinationen von zwei oder mehreren davon verwendet werden.

Unter diesen Anhydriden kommen bevorzugt bei Raumtemperatur flüssige Verbindungen wie Methylhexahydrophthalsäureanhydrid (MHHPA), Methyltetrahydrophthalsäureanhydrid (MTHPA), Methyl-endomethylentetrahydrophthalsäureanhydrid (METH, NMA) und dessen Hydrierungsprodukt als Härter zum Einsatz.

Die bevorzugten Anhydride zur Verwendung als Härter (B) sind beispielsweise unter folgenden Handelsnamen kommerziell erhältlich. MHHPA beispielsweise unter den Handelsnamen HN-5500 (Hitachi Chemical Co., Ltd.) und MHHPA (Dixie Chemical Company, Inc.); METH unter den Handelsnamen NMA (Dixie Chemical Company, Inc.), METH/ES (Polynt S.p.A.) und MHAC (Hitachi Chemical Co., Ltd.).

Als Härter (B) für die Epoxidharzkomponente (A) können ferner auch stickstoffhaltige Verbindungen, Verbindungen mit zwei oder mehr phenolischen Hydroxylgruppen oder Aminophenole verwendet werden, die als Härter für Epoxidmassen bekannt sind.

Beispiele für geeignete stickstoffhaltige Verbindungen umfassen Amine, insbesondere aliphatische Polyamine, arylaliphatische Polyamine, cycloaliphatische Polyamine, aromatische Polyamine und heterocyclische Polyamine, sowie Imidazole, Cyanamide, Polyharnstoffe, Mannich Basen, Polyetherpolyamine, Polyaminoamide, Phenalkamine, Sulfonamide, Aminocarbonsäuren oder Kombinationen der genannten Substanzklassen. Ebenso können Reaktionsprodukte aus Epoxiden und/oder Anhydriden und den voranstehend genannten stickstoffhaltigen Verbindungen als Härter (B) eingesetzt werden.

Geeignete Verbindungen mit mehr als einer phenolischen Hydroxylgruppe pro Molekül, die als Härter (B) verwendet werden können umfassen, phenolische Novolake oder Resole, allgemein Kondensationsprodukte von Aldehyden (bevorzugt Formaldehyd und Acetaldehyd) mit Phenolen, Kresolnovolake und Biphenyldiole. Als Härter geeignet sind ferner auch die Umsetzungsprodukte von Bisphenolen mit Epoxidharzen vom Novolak-Typ.

Der Härter (B) umfasst vorzugsweise mindestens eines der oben genannten Anhydride sowie wahlweise eine der genannten stickstoffhaltigen Verbindungen, phenolischen Verbindungen und/oder Aminophenole. Bevorzugt besteht der Härter (B) zu mindestens 70 Gew.-% aus dem Anhydrid, vorzugweise zu mindestens 80 Gew.-% oder mindestens 90 Gew.-%.

Ganz besonders bevorzugt besteht der Härter (B) vollständig aus einem der vorgenannten Anhydride.

Die Härterkomponente (B) liegt in der erfindungsgemäßen Masse bevorzugt in einem Anteil von 2-60 Gew.-% vor, weiter bevorzugt von 4-30 Gew.-% und besonders bevorzugt von 5-20 Gew.-%, jeweils bezogen auf das Gesamtgewicht der Masse.

### Komponente (C): Beschleuniger

Die erfindungsgemäßen Massen können wahlweise einen Beschleuniger (C) enthalten. Dieser kann aus allen kommerziell verfügbaren oder in der Literatur beschriebenen Stoffen zur Beschleunigung oder Katalyse der Polyaddition zwischen Epoxiden und einem Härter gewählt werden. Lediglich beispielhaft und ohne eine Beschränkung auf die genannten Stoffe sind hier die Substanzklassen der aliphatischen Amine, aromatischen Amine, Polyetheramine, (substituierten) Imidazole, Epoxy-Imidazol-Addukte, Imidazolium-Salze, Metallkomplexe, Carbonsäuresalze, Phosphoniumsalze, Salze primärer, sekundärer oder tertiärer Amine, Ammoniumsalze, Piperidine und deren Salze, Pyridine und deren Salze, Phosphor- und Phosphonsäureester, Phosphane, Phosphanoxide, Phosphite, Phosphinate und andere Organophosphorverbindungen, annellierte Amidinbasen (wie Diazabicycloundecen oder Diazabicyclononen) und deren Salze für die Beschleunigung der Härtung genannt.

Bevorzugt kommen als Beschleuniger (C) für die Anhydridhärtung substituierte Imidazole oder Phosphonium-Salze zum Einsatz. Letztere sind kommerziell beispielsweise unter den Handelsnamen Curezol™ 2MZ-H, C11Z, C17Z, 1.2DMZ, 2E4MZ, 2PZ-PW, 2P4MZ, 1B2MZ, 1B2PZ, 2MZ-CN, C11Z-CN, 2E4MZ-CN, 2PZ-CN, C11Z-CNS, 2PZCNS-PW, 2MZA-PW, C11Z-A, 2E4MZ-A, 2MA-OK, 2PZ-OK, 2PHZ-PW, 2P4MHZ, TBZ, SFZ, 2PZL-T von der Firma Shikoku Chemicals Corp., Japan, erhältlich. Phosphonium-Salze wie Tetraphenylphosphoniumtetraphenylborat, Tetrabutylphosphonium-p-toluolsulfonat und weitere sind von der Sigma-Aldrich Chemie GmbH, Deutschland, oder der loLiTec lonic Liquids Technologies GmbH, Deutschland, erhältlich.

Bei Einsatz von Aminen als Härter (B) können als Beschleuniger (C) bevorzugt substituierte Harnstoffe wie p-Chlorphenyl-N,N-dimethylharnstoff (Monuron), 3,4-Dichlorphenyl-N,N-dimethylharnstoff (Diuron) oder 3-Phenyl-1,1-dimethylharnstoff (Fenuron) verwendet werden.

Die Komponente (C) kann in der erfindungsgemäßen Masse in einem Anteil von 0-5 Gew.-% vorliegen, weiter bevorzugt von 0.02-2.5 Gew.-% und besonders bevorzugt von 0.03-1 Gew.-%, jeweils bezogen auf das Gesamtgewicht der Masse.

### Komponente (D): strahlungshärtende Komponente

Die strahlungshärtende Komponente (D) umfasst wenigstens ein mindestens trifunktionelles (Meth)Acrylat und ist hinsichtlich ihrer chemischen Grundstruktur (z.B. aromatisch, aliphatisch, cycloaliphatisch) nicht weiter eingeschränkt. Bevorzugt umfasst die strahlungshärtende Komponente (D) wenigstens ein mindestens tetrafunktionelles (Meth)Acrylat, besonders bevorzugt wenigstens ein mindestens pentafunktionelles (Meth)Acrylat.

Die Bezeichnung "(Meth)Acrylat" sowie sinngleiche Bezeichnungen stehen hier und im Folgenden sowohl für Derivate der Acrylsäure, als auch der Methacrylsäure, und Mischungen davon.

Handelsübliche, mindestens trifunktionelle (Meth)Acrylate, die in erfindungsgemäßen Massen eingesetzt werden können, basieren beispielsweise auf den (Meth)Acrylsäureestern von mehrwertigen Alkoholen wie Glycerin, Trimethylolpropan, Ditrimethylolpropan, Pentaerythritol, Dipentaerythritol, Tris-(hydroxyethyl)isocyanurat oder deren Alkoxylierungsprodukten, beispielsweise durch Ethoxylierung und/oder Propoxylierung modifizierte Alkohole.

Auch von mehrfach verzweigten oder dendrimeren Alkoholen abgeleitete (Meth)Acrylate können vorteilhaft verwendet werden. Insbesondere kann das mindestens trifunktionelle (Meth)Acrylat eine dendrimere Verbindung mit terminal auf einem dendrimeren Rest angeordneten (Meth)Acrylatgruppen umfassen. Der dendrimere Rest kann eine monomere, oligomere oder polymere Verbindung sein, bevorzugt ein Oligomer oder Polymer aus der Gruppe der Siloxane, Polyether, Polyester, Polyurethane und Kombinationen davon.

Neben (Meth)Acrylsäureestern können auch Urethan(meth)acrylate mehrwertiger Alkohole, (Meth)Acrylamide mehrwertiger Amine oder Epoxy(meth)acrylate eingesetzt werden.

Hochfunktionelle (Meth)Acrylate mit drei oder mehr (Meth)Acrylresten bauen bei Bestrahlung schnell eine hohe Vernetzungsdichte auf und ermöglichen daher bereits bei geringen Massenanteilen eine Lichtfixierung der erfindungsgemäßen Masse. Die geringen erforderlichen Mengen erlauben es, das typische Eigenschaftsprofil der den Massen zugrundeliegenden gehärteten Epoxidharze, insbesondere von Säureanhydrid-gehärteten Epoxidharzen, in hohem Umfang beizubehalten.

Bevorzugte Beispiele für die mindestens trifunktionelle (Meth)Acrylatkomponente umfassen Trimethylolpropantriacrylat (TMPTA), Dipentaerythritolpentaacrylat (DIPEPA) und Dipentaerythritolhexaacrylat (DPHA) sowie Mischungen davon. Diese sind kommerziell von der Firma Sartomer unter den Markenbezeichnungen SR351, SR399 und DPHA erhältlich.

Bevorzugt kommen mindestens tetrafunktionelle (Meth)Acrylate zum Einsatz, die beispielsweise aus mehrfach verzweigten oder dendrimeren Polyolen, wie den Boltorn Typen H311, P500, P501, P1000, H2004 (alle Firma Perstorp, Schweden), durch teilweise oder vollständige Veresterung mit (Meth)Acrylsäure oder (Meth)Acrylsäureanhydrid, oder durch vollständige oder teilweise Umsetzung der verzweigten oder dendrimeren Polyole zu den entsprechenden Urethan(meth)acrylaten, erhalten werden können. Spezifische Beispiele für kommerziell erhältliche höherfunktionelle (Meth)Acrylate umfassen die Typen Viscoat™ 1000 und Viscoat™ 1020 von der Firma Osaka Organic Chemical Industry, Japan, Miramer™ SP1108 und SP1106 von der Firma Miwon Specialty Chemical Co. Ltd., Korea, sowie CN2302 und CN2303 von der Firma Sartomer Europe, Frankreich.

Ferner kann die strahlungshärtende Komponente (D) neben dem mindestens einen mindestens trifunktionellen (Meth)Acrylat auch mono- und/oder difunktionelle (Meth)Acrylate umfassen.

Beispiele für geeignete monofunktionelle (Meth)Acrylate sind Isobornylacrylat, 2-Hydroxyethylacrylat, 4-Hydroxybutylacrylat, Stearylacrylat, Tetrahydrofurfurylacrylat, 2-Hydroxy-3-phenoxypropylacrylat, 2-Hydroxypropylacrylat, Cyclohexylacrylat, 3,3,5-Trimethylcyclohexanolacrylat, Behenylacrylat, 2-Methoxyethylacrylat und andere ein- oder mehrfach alkoxylierte Alkylacrylate, Isobutylacrylat, Isooctylacrylat, Laurylacrylat, Tridecylacrylat, Isostearylacrylat, 2-(o-Phenylphenoxy)ethylacrylat, Acryloylmorpholin, N,N-Dimethylacrylamid und andere N-N-Dialkylacrylamide, N-Alkylacrylamide, N-Alkoxyalkylacrylamide sowie anderweitig subsituierte Acrylamide genannt. Auch die analogen Methacrylate können in den erfindungsgemäßen Massen eingesetzt werden.

Beispiele für difunktionelle Acrylate sind 1,4-Butandioldiacrylat, 1,6-Hexandioldiacrylat, 1,10-Decandioldiacrylat, Tricyclodecandimethanoldiacrylat, Dipropylenglycoldiacrylat, Tripropylenglycoldiacrylat und andere Glycoldiacrylate, Polybutadiendiacrylat, Cyclohexandimethanoldiacrylat, Diurethanacrylate von monomeren, oligomeren oder polymeren Diolen und Polyolen.

Bei den (meth)acrylathaltigen Verbindungen der Komponente (D) kann es sich neben reinen (Meth)Acrylaten auch um Hybridmoleküle handeln, die beispielsweise zusätzlich eine Epoxyfunktionalität oder Härterfunktionalität aufweisen. Lediglich beispielhaft sei hierfür Glycidylmethacrylat genannt.

Die strahlungshärtende Komponente (D) liegt in den erfindungsgemäßen Massen in einem Anteil von 0.5-5 Gew.-% vor, bevorzugt weniger als 4 Gew.-%, jeweils bezogen auf das Gesamtgewicht der Masse. Größere Anteile der Komponente (D) können den thermischen Ausdehnungskoeffizienten und somit die Zuverlässigkeit der gehärteten Massen negativ beeinflussen. Auch Dauer und Temperatur des Warmhärteschrittes müssen bei steigendem Anteil der Komponente (D) erhöht werden.

Der Anteil des mindestens trifunktionellen (Meth)Acrylats am Gesamtgewicht der strahlungshärtenden Komponente (D) beträgt mindestens 50 Gew.-%. Das mindestens eine trifunktionelle (Meth)Acrylat bildet somit den Hauptanteil der strahlungshärtenden Komponente (D). Zu geringe Anteile des mindestens trifunktionellen (Meth)Acrylats können zu Nachteilen in Bezug auf die Geschwindigkeit oder das Ausmaß der Lichtfixierung führen.

Besonders bevorzugt beträgt der Anteil des mindestens trifunktionellen (Meth)Acrylats an der Komponente (D) mindestens 60 Gew.-%, weiter bevorzugt mindestens 70 Gew.-%, noch weiter bevorzugt mindestens 80 Gew.-% oder mindestens 90 Gew.-%, und ganz besonders bevorzugt 100 Gew.-%.

Der Anteil der strahlungshärtenden Komponente (D) an der Gesamtmasse der organischen Komponenten (A) bis (E) beträgt bevorzugt höchstens 30 Gew.-%, weiter bevorzugt höchstens 25 oder 20 Gew.-% und besonders bevorzugt höchstens 15 Gew.-%.

### Komponente (E): Photoinitiator

Neben der strahlungshärtenden Verbindung (D) enthalten die Massen noch einen Photoinitiator (E) für die radikalische Polymerisation. Als Photoinitiatoren können die üblichen, im Handel erhältlichen Verbindungen eingesetzt werden, wie beispielsweise α-Hydroxyketone, Benzophenon, α,α-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Mehtyl-o-benzoylbenzoat, Benzoin, Benzoinethylether, Benzoinisopropylether, Benzoinisobutylehter, 2-Hydroxy-2-methyl-1-phenylpropan-1-on, 2-lsopropylthioxanthon, Dibenzosuberon, 2,4,6-Trimethylbenzoyldiphenylphosphinoxid und Bisacylphosphinoxide, wobei die genannten Photoinitiatoren allein oder in Kombination von zwei oder mehreren der genannten Verbindungen verwendet werden können.

Als UV-Photoinitiatoren können beispielsweise die IRGACURE™-Typen von BASF SE eingesetzt werden, so beispielsweise die Typen IRGACURE 184, IRGACURE 500, IRGACURE 1179, IRGACURE 2959, IRGACURE 745, IRGACURE 651, IRGACURE 369, IRGACURE 907, IRGACURE 1300, IRGACURE 819, IRGACURE 819DW, IRGACURE 2022, IRGACURE 2100, IRGACURE 784, IRGACURE 250, IRGACURE TPO, IRGACURE TPO-L. Ferner sind die DAROCUR™-Typen von BASF SE verwendbar, so beispielsweise die Typen DAROCUR MBF, DAROCUR 1173, DAROCUR TPO und DAROCUR 4265.

Der in den erfindungsgemäßen Massen eingesetzte Photoinitiator ist vorzugsweise durch aktinische Strahlung einer Wellenlänge von 200 bis 500 nm, besonders bevorzugt 320 bis 480 nm, aktivierbar. Bei Bedarf kann die Kombination mit einem geeigneten Sensibilisierungsmittel erfolgen.

Der Photoinitiator (E) liegt in den erfindungsgemäßen Massen, bezogen auf die Masse der gesamten Formulierung, typischerweise in einem Bereich von 0.01-5 Gew.-%, bevorzugt weniger als 2 Gew.-%, besonders bevorzugt weniger als 1 Gew.-% vor.

### Komponente (F): Füllstoff

Ferner enthalten die erfindungsgemäßen Massen mindestens einen Füllstoff (F). Dieser beeinflusst die chemische Beständigkeit, die Medienaufnahme und den thermischen Ausdehnungskoeffizienten der erfindungsgemäßen Massen. Je nach gefordertem Eigenschaftsprofil und Verwendungszweck der erfindungsgemäßen Masse können verschiedene Füllstoffe oder Kombinationen davon verwendet werden.

Zur Erzielung eines geringen thermischen Ausdehnungskoeffizienten wird üblicherweise Quarz oder Quarzglas als Füllstoff verwendet. Auch Materialien mit negativen thermischen Ausdehnungskoeffizienten (wie z.B. Zirkoniumwolframat) können zu diesem Zweck eingesetzt werden.

Zur Erzielung einer höheren thermischen Leitfähigkeit können Füllstoffe wie Aluminiumoxide, Aluminiumnitrid, Bornitrid, Graphit (auch expandierter Graphit oder graphit-basierte Erzeugnisse der Nanotechnologie), Kohlenstoffnanoröhren, oder metallische Füllstoffe eingesetzt werden.

Zur Erzielung einer isotropen oder anisotropen elektrischen Leitfähigkeit können metallische Füllstoffe oder mit elektrisch leitfähigen Schichten überzogene nichtmetallische Füllstoffe eingesetzt werden.

Zur Erzielung definierter Klebschichtdicken können sogenannte "Spacer-Partikel" mit eng definierten Partikelformen und Partikelgrößenverteilungen als Füllstoff eingesetzt werden.

Die Auswahl der Füllstoffe ist in Hinblick auf Partikelformen (wie z.B. kantig, sphärisch, plättchen- oder nadelförmig, Hohlformen) und Partikelgrößen (makroskopisch, mikroskopisch, nanoskalig) in keiner Weise beschränkt. Bekanntermaßen können auch verschiedene Partikelformen oder Partikelgrößen bzw. Partikelgrößenverteilungen in Kombination eingesetzt werden um beispielsweise eine niedrige Viskosität, einen höheren maximalen Füllgrad oder eine hohe elektrische und thermische Leitfähigkeit zu erzielen.

Bevorzugt ist der Füllstoff (F) aus der folgenden Gruppe ausgewählt: Oxide, Nitride, Boride, Carbide, Sulfide und Silicide von Metallen und Halbmetallen, einschließlich gemischte Verbindungen mehrerer Metalle und/oder Halbmetalle; Kohlenstoffmodifikationen wie Diamant, Graphit und Kohlenstoffnanoröhren; Silicate und Borate von Metallen und Halbmetallen; alle Arten von Gläsern; Metalle und Halbmetalle in elementarer Form, in Form von Legierungen oder intermetallischen Phasen; in der Harzmatrix unlösliche anorganische oder organische Salze; und Partikel aus polymeren Materialien, wie beispielsweise Silikon, Polyamid, Polyethylen und PTFE.

Eine Verwendung von Mischungen verschiedener Füllstoffe (F) ist ebenfalls im Sinne dieser Erfindung.

Der Füllstoff (F) kann in den erfindungsgemäßen Massen in einem Anteil von 1-90 Gew.-% vorliegen, bevorzugt 10-80 Gew.-%, besonders bevorzugt 20-80 Gew.-% oder 40 bis 80 Gew.-%, jeweils bezogen auf das Gesamtgewicht der Masse. Epoxidmassen mit einem hohen Füllstoffgehalt von über 40 Gewichtsprozent sind besonders für Anwendungen geeignet, die eine hohe Temperaturwechselbeständigkeit und Medienbeständigkeit erfordern.

### Komponente (G): Zusatzstoffe

Optional können die erfindungsgemäßen Massen weitere Zusatzstoffe, allein oder in Kombination, enthalten. Beispielhaft und nicht abschließend sind Zähigkeitsmodifikatoren wie Core-Shell-Partikel oder Block-Copolymere, Farbstoffe, Pigmente, Fluoreszenzmittel, Thixotropiermittel, Verdicker, Thermostabilisatoren, UV-Stabilisatoren, Flammschutzmittel, Korrosionsinhibitoren, Verdünnungsmittel, Verlaufs- und Benetzungsadditive oder Haftvermittler genannt.

Die Zusatzstoffe (G) liegen in den erfindungsgemäßen Massen bevorzugt in einem Anteil von 0-15 Gew.-% vor, bevorzugt 0-10 Gew.-%, besonders bevorzugt 0-5 Gew.-%, jeweils bezogen auf das Gesamtgewicht der Masse.

Die voranstehenden Aufzählungen sind als beispielhaft für die Komponenten (A) bis (G) zu sehen und sollen keineswegs als limitierend verstanden werden.

### Formulierung der erfindungsgemäßen Massen:

Eine erfindungsgemäße Masse besteht aus den folgenden Komponenten:
(A) 2 - 60 Masseanteile der mindestens difunktionellen epoxidhaltigen Verbindung;
(B) 2 - 60 Massenanteile des Härters für die epoxidhaltige Verbindung;
(C) 0 - 5 Massenanteile des Beschleunigers;
(D) 0,5 - 5 Massenanteile der strahlungshärtenden Verbindung;
(E) 0,01 - 5 Massenanteile des Photoinitiators;
(F) 1 - 90 Massenanteile des Füllstoffs; und
(G) 0 - 15 Massenanteile der Zusatzstoffe
wobei die Summe der Massenanteile der Komponenten (A) bis (G) 100 ergibt.

Die strahlungshärtende Verbindung (D) umfasst ein mindestens trifunktionelles (Meth)Acrylat, bevorzugt ein von mehrfach verzweigten oder demdrimeren Polyolen abgeleitetes (Meth)Acrylat.

Der Anteil des mindestens trifunktionellen (Meth)Acrylats an der strahlungshärtenden Komponente (D) beträgt vorzugsweise 50 bis 100 Gew.-%.

Der Anteil der strahlungshärtenden Komponente (D) an der Gesamtmasse der organischen Komponenten (A) bis (E) beträgt bevorzugt höchstens 30 Gew.-%, weiter bevorzugt höchstens 25 oder höchstens 20 Gew.-% und besonders bevorzugt höchstens 15 Gew.-%.

### Verwendung der erfindungsgemäßen Massen

### a) Lichtfixierung

Die Fixierung der beschriebenen Massen erfolgt durch Bestrahlung mit Licht einer zum gewählten Photoinitiator passenden Wellenlänge. Bevorzugt sind insbesondere Wellenlängen zwischen 200 und 500 nm, besonders bevorzugt zwischen 320 und 480 nm. Die Bestrahlung der Masse führt zu einer Hautbildung auf der bestrahlten Oberfläche der Masse, die stabil genug ist, um eine Formstabilität der Masse bei den für die Warmhärtung verwendeten hohen Temperaturen zu gewährleisten.

Die Eindringtiefe und somit auch die Dicke der lichtfixierten Schicht kann über die Bestrahlungsdosis, die Menge und Art der eingesetzten Füllstoffe und Zusatzstoffe und die verwendete Wellenlänge gesteuert werden und liegt typischerweise zwischen 10 µm und 500 µm für schwarz pigmentierte Massen, und größer 2 mm für nicht pigmentierte, lediglich mit Quarz gefüllte Massen.

### b) Warmhärtung

Unabhängig von Art und Ausmaß der Lichtfixierung muss zur vollständigen Aushärtung der erfindungsgemäßen Massen ein Warmhärteschritt durchgeführt werden.

Der Warmhärteschritt erfolgt je nach verwendetem Härter bevorzugt in einem Temperaturbereich zwischen 60 und 200 °C, im Falle von Anhydriden als Härter bevorzugt bei einer Temperatur im Bereich von 100 bis 180 °C.

Der Energieeintrag für die Warmhärtung kann über Konvektion, beispielsweise in einem Umluftofen, durch Wärmeleitung, beispielsweise mittels einer Heizplatte oder Thermode, oder mittels elektromagnetischer Strahlung, beispielsweise mittels IR-Strahlungsquellen, LASER, Mikrowellen oder Induktion, erfolgen.

Die Warmhärtung kann ein- oder mehrstufig erfolgen. Typische Aushärtebedingungen für anhydridhärtende Massen sind beispielsweise:
- einstufig: 30 min bei 150 °C
- einstufig: 2 h bei 125 °C
- mehrstufig: 1 h bei 100 °C, anschließend 30 min bei 150 °C

Anwendungsspezifisch ist auch eine Warmhärtung der Massen bei höheren Temperaturen oder eine Warmhärtung während anderer Prozessschritte möglich, beispielsweise während eines Reflow-Lötprozesses.

Nach der Lichtfixierung und Warmhärtung weist die erfindungsgemäße Masse bevorzugt einen thermischen Ausdehnungskoeffizienten auf, der im Vergleich zu dem thermischen Ausdehnungskoeffizient einer entsprechenden Epoxidmasse ohne die Komponenten (D) und (E), jedoch mit gleichem Füllgrad, höchstens verdoppelt ist. Das Eigenschaftsprofil der erfindungsgemäßen Massen ist damit im Vergleich zu den rein warmhärtenden Epoxidmassen nahezu unverändert.

Bevorzugt weist die Masse nach der Lichtfixierung und Warmhärtung einen Glasübergangspunkt Tg von mindestens 150 °C auf. Derartige Massen sind gegenüber den Umgebungsbedingungen beim Einsatz in der Kraftfahrzeugelektronik hinreichend stabil, insbesondere beim Einsatz im Motorraum.

Des Weiteren zeigt die erfindungsgemäße Masse bevorzugt eine DSC-Endsettemperatur, die höchstens 10 °C über der DSC-Endsettemperatur einer entsprechenden Epoxidmasse ohne die Komponenten (D) und (E), jedoch mit gleichem Füllgrad, liegt. Auf diese Weise kann die problemlose Verarbeitbarkeit der erfindungsgemäßen Masse in automatisierten Prozessen gewährleistet werden.

Die erfindungsgemäßen Massen zeichnen sich dadurch aus, dass die gehärteten Zusammensetzungen eine hohe Beständigkeit gegenüber verschiedenen Medien und Umwelteinflüssen aufweisen. Zusätzlich besitzen die gehärteten Zusammensetzungen einen niedrigen thermischen Ausdehnungskoeffizienten. Diese Eigenschaften prädestinieren die Massen zum Verguss von elektronischen Bauteilen und Baugruppen. Insbesondere werden bei Baugruppen, die im späteren Betrieb wechselnden thermischen Belastungen oder Medien ausgesetzt sind, Massen benötigt, die über die gesamte Lebensdauer der Baugruppe in ihren Eigenschaften möglichst stabil bleiben und wenig mechanische Spannungen erzeugen. Diese Anforderungen werden durch die erfindungsgemäßen Massen erfüllt.

Die Lichtfixierbarkeit der Massen erlaubt es bei Vergussanwendungen auf Leiterplatten und anderen Substraten mit komplexer Bauteilgeometrie, zunächst verschiedene Bauteile auszuwählen und einzeln zu vergießen, die Vergussmasse über diesen Bauteilen durch Bestrahlung zu fixieren und danach alle Massen auf dem Substrat in einem einzigen abschließenden Schritt warm zu härten und die Bauteile so zu verkapseln. Das Fixieren der Massen auf den Bauteilen durch Bestrahlung verhindert bei diesem Vorgehen zuverlässig ein unerwünschtes Verfließen der Vergussmassen.

Gegenstand der Erfindung ist auch ein Verfahren zum selektiven Verkapseln eines Bauteils auf einem Substrat, bei dem ein Substrat mit mehreren Bauteilen bereitgestellt wird; wenigstens ein erstes Bauteil aus den mehreren Bauteilen ausgewählt und die erfindungsgemäße Masse auf das erste Bauteil dosiert wird; und die Masse auf dem ersten Bauteil durch Bestrahlen mit aktinischer Strahlung fixiert und die fixierte Masse anschließend warmgehärtet wird.

Eine bevorzugte Verfahrensabfolge besteht dabei aus folgenden Schritten:
a) Selektives Dosieren der Masse auf ein erstes Bauteil oder eine Gruppe von Bauteilen unter Bildung eines Glob-Tops;
b) Fixierung des Glob-Tops auf dem ersten Bauteil oder der Gruppe von Bauteilen durch Bestrahlung der Masse;
c) Optional ein- oder mehrfache Wiederholung der Schritte a) und b) auf weiteren Bauteilen oder Bauteilgruppen; und
d) Warmhärtung der fixierten Masse.

Die Dosierung der erfindungsgemäßen Masse kann in dem hier und in allen nachfolgend beschriebenen Verfahren mittels aller dem Fachmann bekannten Auftragsverfahren erfolgen, wie beispielsweise einer Nadeldosierung, Siebdruck, Jetten oder Vakuumverguss.

Die Fixierung durch Bestrahlung kann mit beliebigen Strahlenquellen erfolgen, die in der Lage sind, aus dem Photoinitiator (E) Radikale frei zu setzen. Durch verschiedene Bestrahlungszeiten und/oder Bestrahlungsintensitäten kann die Eindringtiefe der Strahlung und damit die Dicke der lichtfixierten Schicht auf der bestrahlten Oberfläche der Masse variiert werden. Bevorzugt ist die Erzeugung so geringer Schichtdicken, die gerade eine Kontur- und Formstabilität der bestrahlten Massen über dem Bauteil gewährleisten.

Die Abfolge aus Dosieren des Glob-Tops und Fixierung durch Bestrahlung kann iterativ mit verschiedenen Bauteilen wiederholt werden. Vorteilhaft bei diesem Verfahren ist, dass nur ein einzelner abschließender Warmhärtungsschritt nötig ist. Durch die Lichtfixierung verbleiben die einzelnen Glob-Tops formstabil und es tritt kein unerwünschtes Verfließen der Masse auf. Zusätzliche Warmhärteschritte nach dem Dosieren des jeweiligen Glob-Tops können mit den erfindungsgemäßen Massen entfallen. Ferner wirken sich im Rahmen dieses Verfahrens auch längere Produktionsstillstände nicht auf die Qualität und Präzision des fertigen Vergusses aus.

In einer weiteren bevorzugten Ausführungsform kann für Massen, die zusätzlich ein Fluoreszenzmittel als Zusatzstoff (G) enthalten, eine optische Auftragskontrolle erfolgen, bevor das Bauteil bestrahlt wird. Dies erlaubt die Detektion von Dosierfehlern und im Zweifelsfalle ein Nacharbeiten am Bauteil, bevor weitere Fixierungs- oder Härtungsschritte erfolgen. Insbesondere bei teuren Platinen ist eine Detektion etwaiger Dosierfehler wünschenswert, um den Ausschuss zu reduzieren.

In einer weiteren Ausführungsform der zuvor und aller nachfolgend beschriebenen Verfahren kann die Fixierung der Masse durch Bestrahlung auch über einen Flächenstrahler erfolgen. So können auch mehrere Glob-Tops parallel fixiert werden.

Eine weitere Ausführungsform des erfindungsgemäßen Verfahrens umfasst eine Kombination eines Glop-Top-Vergusses und eines Dam & Fill-Prozesses unter Verwendung der erfindungsgemäßen Massen. Ein bevorzugtes Verfahren zum selektiven Verkapseln eines oder mehrerer Bauteile auf einem Substrat umfasst dabei folgende Schritte:
a) Selektives Dosieren der erfindungsgemäßen Masse auf ein erstes Bauteil und/oder eine Bauteilgruppe unter Bildung eines Glob-Tops;
b) Fixierung des Glob-Tops auf dem ersten Bauteil und/oder der Bauteilgruppe durch Bestrahlung der Masse
c) Dosieren eines Dammes um das erste Bauteil und/oder die Bauteilgruppe herum, unter Bildung einer von dem Damm umschlossenen Kavität;
d) Füllen der Kavität mit einer warmhärtenden Masse;
e) Warmhärten des Glob-Tops, des Dammes und der warmhärtenden Masse.

Die Schritte a), b) und c) können auch wiederholt und, falls vorteilhaft, auch in abweichender Reihenfolge kombiniert werden. Beispielsweise kann die Dosierung des Dammes (Schritt c) auch vor Dosierung (Schritt a) oder Fixierung (Schritt b) des Glob-Tops erfolgen. Außerdem können in Schritt a) auch mehrere Glob-Tops dosiert und anschließend einer gemeinsamen Lichtfixierung (Schritt b) unterzogen werden.

Das Dosieren des Damms in Schritt c) und/oder das Füllen der Kavität in Schritt d) kann unter Verwendung der erfindungsgemäßen Massen erfolgen. Es ist aber auch möglich, zur Dosierung des Damms und/oder zum Füllen der Kavität auf im Stand der Technik bekannte und kommerziell erhältliche Harzmassen zurückzugreifen.

Die Höhe des in Schritt c) dosierten Dammes kann in weiten Bereichen frei gewählt und an die Höhe verschiedener Bauteile oder Bauteilgruppen angepasst werden. Das Stapeln einzelner Dämme ("dam-stacking") ist mit den erfindungsgemäßen Massen ebenfalls möglich.

Das beschriebene Verfahren kann ferner durch Einsatz eines Fluoreszenzmittels, Farbstoffs oder Pigments mit einer optischen Auftragskontrolle verbunden werden.

Optional ist es auch möglich, den gefüllten Damm in Anschluss an Schritt d), vor der Warmhärtung in Schritt e), zusätzlich durch Bestrahlung zu fixieren. Dies verhindert ein weiteres Verfließen der Massen und erlaubt das freie Bewegen der Platine.

Ferner ist bei hohen Dammstrukturen auch denkbar, diese vor Schritt d) zusätzlich durch Bestrahlung zu fixieren, um eine standfestere Struktur zu erzeugen. Ein zusätzlicher Vorteil einer Lichtfixierung der Dammstruktur ergibt sich bei der abschließenden Warmhärtung. Der lichtfixierte Damm auf Basis der erfindungsgemäßen Massen neigt nicht mehr zum Verfließen und verhindert damit vor allem bei großen eingehäusten Strukturen ein weitflächiges Verlaufen der Masse. Etwaige Viskositätsänderungen des Füllmaterials in der Anlaufphase der Warmhärtung stellen damit prozessseitig kein Problem dar.

Das beschriebene Verfahren unter Einsatz der erfindungsgemäßen Massen eignet sich vor allem zum flächigen Verguss und bietet den Vorteil, dass hohe Bauteile oder Bauteilgruppen durch einzelne Glob-Tops geschützt werden können, während das Vergussniveau über die Höhe des Dammes niedriger gewählt werden kann. Insgesamt ist somit ein partiell flacherer Verguss möglich. Dies erlaubt den ressourcenschonenden Einsatz des Vergussmaterials.

Insgesamt ist so im Rahmen von Vergussprozessen eine größere Designfreiheit möglich. Das beschriebene Verfahren stellt damit eine Alternative zu klassischen Molding (Formpress-)Prozessen dar. Der kostspielige Einsatz bauteilspezifischer Moldwerkzeuge kann bei dem erfindungsgemäßen Verfahren entfallen.

Besonders bevorzugt ist die zum Füllen der Kavität verwendete warmhärtende Masse und die zur Dosierung des Damms verwendete Harzmasse aus den gleichen Materialien zusammengesetzt, vorzugsweise aus einer erfindungsgemäßen Masse. Die Verwendung des gleichen Materials stellt ein einheitliches Eigenschaftsprofil der ausgehärteten Massen sicher.

Gemäß einer weiter bevorzugten Ausführungsform weist die für das Dosieren des Damms verwendete Harzmasse eine höhere Viskosität auf, als die zum Füllen der Kavität verwendete Masse. Die Formulierung unterschiedlich viskoser Varianten der warmhärtenden Masse von Schritt d) und des Dammmaterials kann den Dosierprozess erleichtern und beispielsweise die Standfestigkeit des Dammes verbessern. Derartige Ausführungsformen sind damit ebenfalls im Sinne der Erfindung.

Neben den beschriebenen Vergussanwendungen eignen sich die erfindungsgemäßen Massen ebenfalls zum Verkleben, Beschichten und Abdichten.

Gegenstand der Erfindung ist somit schließlich auch die Verwendung der erfindungsgemäßen Masse zum Fixieren und/oder selektiven Verkapseln von elektrischen, elektronischen und/oder elektromechanischen Bauteilen, bevorzugt von Bauteilen auf Leiterplatten, sowie zum Verkleben, Beschichten und Abdichten.

Die Erfindung wird nachfolgend anhand bevorzugter Ausführungsbeispiele unter Bezugnahme auf die vorangegangene Beschreibung weiter ausgeführt. Die nachfolgenden Beispiele sind dabei nicht in einem einschränkenden Sinne zu verstehen.

### Definitionen und Testverfahren

### Bestrahlung

In den folgenden Ausführungsbeispielen wird, wenn nicht anders angegeben, unter Bestrahlung oder Belichtung die Bestrahlung mit einer LED-Lampe DELOLUX 80 / 400 (nominelle Wellenlänge 400 nm) der Firma DELO Industrie Klebstoffe mit einer Intensität von 200 ± 20 mW/cm² verstanden.

### Raumtemperatur

Raumtemperatur ist definiert als 23 °C ± 2 °C.

### Hautbildung

Ein Tropfen der zu prüfenden Masse wird auf eine geeignete Unterlage (nicht saugfähige, beschichtete Pappe) dosiert und für die jeweils angegebene Zeit mit der angegebenen Intensität mit einer Lampe DELOLUX 80 / 400 (400 nm) belichtet. Danach wird manuell mittels eines Drahtes geprüft, ob bei Berührung der Tropfenoberfläche ein Fadenzug auftritt, oder ob sich bereits eine trockene Haut gebildet hat.

### Hautbildungszeit

Zur Ermittlung der Hautbildungszeit wurden einzelne Tropfen der Massen auf eine Pappe dosiert und unter folgenden Bedingungen belichtet: 0.5 s, 1 s, 2 s, 3 s, 4 s und 5 s, jeweils bei 200 mW/cm², sowie 0.1 s, 0.5 s, 1 s und 2 s, jeweils bei 1000 mW/cm². Als Hautbildungszeit gilt diejenige Zeit, nach der bei Berührung der Oberfläche kein Fadenzug mehr beobachtet werden kann. Die Angabe "< 0.1 s" bedeutet daher, dass nach Belichtung für 0.1 s bei der angegebenen Intensität bereits eine Haut detektiert werden konnte.

### Fließverhalten (Ablauftest)

Als Prüfkörper dient eine nicht saugfähige, beschichtete Pappe mit einer Dicke von etwa 1.5 mm und Kantenlängen von 100 mm x 174 mm.

Auf dem Prüfkörper wird eine Startlinie parallel zu einer der kurzen Kanten (Abstand ca. 15 bis 30 mm) markiert. Oberhalb der Linie werden Tropfen der zu prüfenden Massen von etwa 0.1 g aufgetragen, während die Pappe auf einer waagerechten Fläche aufgelegt ist. Der Prüfkörper wird 2 min in dieser Position belassen. Im Folgenden wird der Prüfkörper senkrecht gestellt und verweilt für die vorbestimmte Zeit in dieser Position, wobei der Klebstoff je nach Fließfähigkeit eine mehr oder weniger lange Strecke nach unten zurücklegt. Der Test kann bei Raumtemperatur oder bei erhöhter Temperatur in einem Umluftofen durchgeführt werden.

Nach Ablauf der Prüfzeit wird der Probekörper zurück in die waagerechte Stellung gebracht und der Ablaufweg des Klebstoffes bestimmt. Hierbei wird die zurückgelegte Strecke von der Startlinie bis zum untersten Ende der jeweiligen Fließfront gemessen. Fließt die Masse bis zum Ende des Prüfkörpers, so wird der Fließweg bis zum Ende der Pappe gemessen und mit einem "größer als"-Zeichen ("> x mm") versehen.

### DSC-Messungen

DSC-Messungen von Reaktivität und Glasübergang erfolgen in einem dynamischen Differenzkalorimeter (DSC) vom Typ DSC 822e oder DSC 823e der Firma Mettler Toledo.

16-20 mg der flüssigen Probe werden dazu in einen Aluminiumtiegel (40 µL) mit Pin eingewogen, mit einem gelochten Deckel verschlossen und einer Messung mit folgenden Segmenten unterzogen: (1) Isotherm, 0 °C, 2 min; (2) dynamisch 0-250 °C, 10 K/min; (3) dynamisch 250-0 °C, -10 K/min; (4) isotherm, 0 °C, 3 min; (5) dynamisch 0-250 °C, 20 K/min. Prozessgas in allen Segmenten ist Luft (Volumenstrom 30 mL/min).

Ausgewertet werden die Heizsegmente (2) für die Reaktivität und (5) für den Glasübergang. Die Reaktionsenthalpie wird mit einer Spline-Kurve als Basislinie ermittelt, auf die Einwaage normiert und ihr Betrag als Exothermie angegeben. Die Glasumwandlung wird über die Tangentenmethode analysiert.

### TMA-Messungen (Thermischer Ausdehnungskoeffizient)

Als Form für die Prüfkörperherstellung dient ein Plättchen (Dicke 2 mm) aus Polyoxymethylen (POM), in dem sich ein Langloch von etwa 25 mm Länge und 4 mm Breite befindet. Die Form wird auf eine Kunststofffolie (biaxial orientierter Polyester, Hostaphan RN, Dicke 75 µm, einseitig silikonisiert) aufgelegt, blasenfrei mit der reaktiven Masse befüllt und mit einer weiteren Abdeckfolie versehen.

Optional kann zu diesem Zeitpunkt eine Lichtfixierung der Masse in der Form erfolgen. Die Bestrahlung erfolgt dabei nacheinander von beiden Seiten und durch die Abdeckfolien.

Die Warmhärtung erfolgt im vorgeheizten Umluftofen bei 150 °C für 50 min, wobei die Prüfkörperform samt Abdeckfolien mittels Federklemmen zwischen zwei Aluminiumplatten (Dicke je 3 mm) geklemmt wird.

Nach dem Erkalten der Prüfkörperform wird die stabförmige Probe der ausgehärteten Masse entformt und eine Materialprobe von ca. 4 mm Breite, 4 mm Länge und 2 mm Dicke davon abgetrennt, mit einem Schleifpapier der Körnung 600 entgratet und der Messung in einem thermomechanischen Analysator (TMA) der Firma Mettler Toledo (Typ TMA A840e oder TMA A841 Ee) zugeführt.

Die Messung umfasst folgende Segmente: (1) Isotherm, 23 °C, 5 min; (2) dynamisch 23-240 °C, 2 K/min. Die Auflagekraft beträgt in allen Segmenten 0.1 N. Ausgewertet wird das Heizsegment (2).

Der mittlere Ausdehnungskoeffizient *α*₁ wurde über den Temperaturbereich 30-150 °C ausgewertet.

### Herstellungsbeispiele

Zur Herstellung der erfindungsgemäßen Massen werden zunächst die flüssigen Bestandteile vermengt und anschließend die Füllstoffe und weitere Feststoffe mithilfe eines Laborrührwerks, Labordissolvers oder eines Speedmixers (Fa. Hauschild) eingearbeitet, bis eine homogene Masse entsteht.

Vergleichsbeispiele können in analoger Weise hergestellt werden.

Die Zusammensetzung der erfindungsgemäßen Massen und der Vergleichsbeispiele ist in den nachfolgenden Tabellen angegeben. Die Angaben in Prozent beziehen sich dabei auf Gewichtsprozent, jeweils bezogen auf das Gesamtgewicht der Masse.

Zur Herstellung der in den folgenden Beispielen angegebenen (Meth)Acrylat-modifizierten Massen wurden kommerziell erhältliche, gefüllte anhydridhärtende Einkomponenten-Epoxidharzmassen verwendet, denen jeweils ein (Meth)Acrylat hinzugefügt wurde. Um einen Verdünnungseffekt durch die zugesetzte strahlungshärtende Komponente auszugleichen, wurde zusätzlich Füllstoff zugefügt, so dass der Füllgrad im Vergleich zur ursprünglichen Epoxidharzmasse unverändert blieb.

Die in den folgenden Tabellen verwendeten Abkürzungen bedeuten jeweils:
GE765: DELOMONOPOX GE765, gefüllte anhydridhärtende Einkomponenten-Epoxidharzmasse ("Glob Top") der Fa. DELO Industrie Klebstoffe GmbH & Co. KGaA
GE725: DELOMONOPOX GE725, gefüllte anhydridhärtende Einkomponenten-Epoxidharzmasse ("Fill") der Fa. DELO Industrie Klebstoffe GmbH & Co. KGaA
Photoinitiator: TPO-L, Firma BASF SE
Acrylat 1: IBOA (Isobornylacrylat)
Acrylat 2: HDDA (Hexandioldiacrylat)
Acrylat 3: TMPTA (Trimethylolpropantriacrylat)
Acrylat 4: DIPEPA (Dipentaerythritolpentaacrylat)
Füllstoff 1: Silbond FW 61 EST (Quarz)

**Tabelle 1: Variation der Funktionalität des Acrylats**

| | GE765 (Kontrolle) | Bsp. 1 (Vergleich) | Bsp. 2 (Vergleich) | Bsp. 3 | Bsp. 4 | Bsp. 5 (Vergleich) |
|---|---|---|---|---|---|---|
| GE765 | 100 | 96.06 | 96.06 | 96.06 | 96.06 | 68.79 |

| **strahlungshärtende Komponente** (D) | | | | | | |
|---|---|---|---|---|---|---|
| Acrylat 1 (IBOA) | - | 1 | - | - | - | 10 |
| Acrylat 2 (HDDA) | - | - | 1 | - | - | - |
| Acrylat 3 (TMPTA) | - | - | - | 1 | - | - |
| Acrylat 4 (DIPEPA) | - | - | - | - | 1 | - |

| **Photoinitiator (E)** | | | | | | |
|---|---|---|---|---|---|---|
| Photoinitiator | - | 0.3 | 0.3 | 0.3 | 0.3 | 0.3 |
| **Füllstoff (F)** | | | | | | |
| Füllstoff 1 | - | 2.64 | 2.64 | 2.64 | 2.64 | 20.91 |
| | | | | | | |
| Summe (Gew.-%) | 100 | 100 | 100 | 100 | 100 | 100 |
| Hautbildung (Bestrahlung: 5 s, 200 mW/cm²) | Nein | Nein | Nein | Ja | Ja | Ja |

Tabelle 1 beinhaltet Beispiele für die Zugabe verschiedener Acrylate und eines Photoinitiators zu einer gefüllten, anhydridhärtenden EinkomponentenEpoxidharzmasse, die kommerziell unter der Bezeichnung DELOMONOPOX GE765 von der Firma DELO Industrie Klebstoffe GmbH & Co. KGaA erhältlich ist. Um den Einfluss der Verdünnung durch die strahlungshärtende Komponente (D) und den Photoinitiator (E) auszuschließen, wurde den Rezepturen zusätzlich Füllstoff zugegeben. Dadurch wird der Füllgrad der Massen im Vergleich zur Ausgangsformulierung (GE765 mit 67 Gew.-% Füllstoff) konstant gehalten.

Im Falle der Bestrahlung des DELOMONOPOX GE765 erfolgt keine Bildung einer Haut. Dieses Produkt enthält weder eine strahlungshärtende Komponente (D) noch einen Photoinitiator (E). Die Massen der Vergleichsbeispiele 1 und 2 enthalten jeweils ein monofunktionelles oder difunktionelles Acrylat und einen Photoinitiator. Nach 5 Sekunden Bestrahlung bei 200 mW/cm² ist bei diesen Massen keine Hautbildung zu beobachten. Gleiche Mengen höherfunktioneller Acrylate führen dagegen nach 5 Sekunden Bestrahlung zur Bildung einer Haut (erfindungsgemäße Beispiele 3 und 4). Bei den geringen Anteilen der Komponente (D) in den modifizierten Massen kann erst durch den Einsatz mindestens trifunktioneller (Meth)Acrylate innerhalb der angegebenen Zeit eine zur Bildung einer Haut ausreichende Vernetzung erzielt werden. Bei Verwendung eines niedrigfunktionellen Acrylats zur Modifizierung der Epoxidmasse ist eine Lichtfixierung erst bei wesentlich höheren Acrylat-Anteilen möglich (Vergleichsbeispiel 5). Derartige Formulierungen sind zwar lichtfixierbar, zeigen aber ein gegenüber der ursprünglichen Epoxidharzmasse nachteiliges Eigenschaftsprofil (Tabelle 2).

**Tabelle 2: Variation des (Meth)Acrylatanteils**

| | GE765 | Bsp. 6 | Bsp. 7 | Bsp. 8 | Bsp. 9 | Bsp. 5 (Vergleich) |
|---|---|---|---|---|---|---|
| GE765 | 100 | 96.06 | 90 | 83.94 | 68.79 | 68.79 |
| Acrylat 1 (IBOA) | | | | | | 10 |
| Acrylat 3 (TMPTA) | | | | | | |
| Acrylat 4 (DIPEPA) | | 1 | 3 | 5 | 10 | |
| Photoinitiator | | 0.3 | 0.3 | 0.3 | 0.3 | 0.3 |
| Füllstoff 1 | | 2.64 | 6.7 | 10.76 | 20.91 | 20.91 |
| Summe (Gew.-%) | 100 | 100 | 100 | 100 | 100 | 100 |

| **DSC Messungen** | | | | | | |
|---|---|---|---|---|---|---|
| DSC Onset (°C) | 138 | 139 | 139 | 140 | 144 | 146 |
| Verschiebung Onset (°C) | 0 | +1 | +1 | +2 | +6 | +8 |
| DSC Peak (°C) | 161 | 163 | 164 | 165 | 171 | 174 |
| Verschiebung Peak (°C) | 0 | +2 | +3 | +4 | +10 | +13 |
| DSC Endset (°C) | 180 | 182 | 184 | 186 | 195 | 198 |
| Verschiebung Endset (°C) | 0 | +2 | +4 | +6 | +15 | +18 |
| DSC Tg (°C) | 187 | 184 | 178 | 181 | 184 | 107 |

| **TMA Messungen** | | | | | | |
|---|---|---|---|---|---|---|
| TMA α1 (ppm/K) mit Lichtfixierung 30-150 °C | 29 | 36 | 35 | 56 | 67 | 94 |

Tabelle 2 zeigt die Variation der Art und der Menge der strahlungshärtenden Komponente (D). Es wurde ebenfalls auf DELOMONOPOX GE765 als Ausgangsformulierung und Kontrolle zurückgegriffen. Diesem Material wurden verschiedene Acrylate und ein Photoinitiator zugegeben. Zum Ausgleich der Verdünnung wurde ebenfalls Quarz als Füllstoff (F) zugegeben, um den Füllgrad konstant zu halten.

Die Formulierungen nach den Beispielen 6 bis 9 erreichen unabhängig vom Anteil der strahlungshärtenden Komponente (D) Glasübergangstemperaturen von über 175 °C. Damit sind die Massen für Vergussanwendungen von elektronischen Bauteilen geeignet.

Die Massen gemäß Vergleichsbeispiel 5 und Beispiel 9 enthalten jeweils mehr als 5 Gew.-% der strahlungshärtenden Komponente (D) und zeigen in den DSC-Messungen erhebliche Verschiebungen der Onset-, Peak- und Endsettemperatur zu höheren Werten. Im Falle von Beispiel 9 mit 10 Gew.-% DIPEPA verschiebt sich die DSC-Endsettemperatur bereits um 15 °C zu höherer Temperatur. Vergleichsbeispiel 5 mit 10 Gew.-% monofunktionellem Acrylat zeigt diesen Effekt in noch größerem Ausmaß.

Für die Warmhärtung der Massen sind mit zunehmendem Anteil der Komponente (D) somit deutlich längere Warmhärteprozesse oder erhöhte Prozesstemperaturen erforderlich. Eine Verschiebung der Endset-Temperatur um mehr als 10 °C zu höheren Temperaturen, im Vergleich zu kommerziell erhältlichen Massen, kann in der industriellen Fertigung bereits zu erheblichen Nachteilen führen.

Zusätzlich sinkt bei der Masse gemäß Vergleichsbeispiel 5 die Glasübergangstemperatur deutlich unter 150 °C und liegt somit schon innerhalb des typischen Temperatureinsatzbereiches (-40 bis +150 °C) von Komponenten im Bereich der Automobilelektronik.

Ferner steigt der thermische Ausdehnungskoeffizient in der Masse gemäß Vergleichsbeispiel 5 - im Vergleich zum erfindungsgemäßen Beispiel 6 - auf das 2.5-fache. Ein Acrylatanteil von 10 Gew.-% führt im Falle von Beispiel 9 bereits zu mehr als einer Verdoppelung des thermischen Ausdehnungskoeffizienten gegenüber der acrylatfreien Kontrollformulierung GE765. Ein höherer thermischer Ausdehnungskoeffizient kann einen früheren Ausfall der verkapselten Bauteile unter thermischer Wechsellast verursachen. Eine Verdoppelung des thermischen Ausdehnungskoeffizienten in Bezug auf die Ausgangsformulierung ist für die meisten Hochzuverlässigkeitsanwendungen gerade noch akzeptabel.

**Tabelle 3: Fixiergeschwindigkeiten bei Bestrahlung**

| | Bsp. 6 | Bsp. 7 | Bsp. 8 | Bsp. 9 |
|---|---|---|---|---|
| 200mW/cm² | < 3 s | < 1 s | < 0.5 s | < 0.5 s |
| 1000mW/cm² | < 0.5 s | < 0.1 s | < 0.1 s | < 0.1 s |

Tabelle 3 zeigt die für die Beispiele 6 bis 9 ermittelten Hautbildungszeiten bei 200 und 1000 mW/cm² Bestrahlungsintensität. Eine höhere Belichtungsintensität oder ein größerer Anteil der Komponente (D) reduziert die Hautbildungszeit und erlaubt somit eine schnellere Fixierung der Massen.

Wie den Messwerten entnommen werden kann, ist bereits bei einem sehr geringen Anteil der Komponente (D) in den erfindungsgemäßen Massen eine Lichtfixierung in Sekundenbruchteilen möglich.

**Tabelle 4: Fließverhalten mit und ohne Lichtfixierung**

| | GE725 (Kontrolle) | Bsp. 10 |
|---|---|---|
| GE725 | 100.00 | 98.7 |
| Acrylat 4 (DIPEPA) | - | 1.0 |
| Photoinitiator | - | 0.3 |
| Summe (Gew.-%) | 100.00 | 100.00 |

| **Ablauftests ohne Belichtung** | | |
|---|---|---|
| RT, 60 min | 25 mm | 33 mm |
| 150 °C, 30 min | > 145 mm | > 145 mm |

| **Ablauftests nach Belichtung (5 s, 200 mW/cm²)** | | |
|---|---|---|
| RT, 60 min | 25 mm | 0 |
| 150 °C, 30 min | > 145 mm | 0 |

Tabelle 4 zeigt als Vergleichsbeispiel das Fließverhalten einer handelsüblichen Vergussmasse (DELOMONOPOX GE725, DELO Industrie Klebstoffe GmbH & Co. KGaA) bei Raumtemperatur und während einer Warmhärtung im Umluftofen bei 150 °C für 30 min. Bei Raumtemperatur kommt es zu einem merklichen, während der Warmhärtung zu einem erheblichen, Verfließen der Masse, unabhängig davon, ob eine Belichtung mit aktinischer Strahlung erfolgte oder nicht. Das erfindungsgemäße Beispiel 10, in dem die handelsübliche Masse mit einer geringen Menge (1.0 Gew.-%) eines fünffachfunktionellen Acrylats sowie einem Photoinitiator versetzt wurde, zeigt nach Belichtung weder bei Raumtemperatur noch unter den Bedingungen der Warmhärtung (150 °C) ein Verfließen im Ablauftest.

Die bei Raumtemperatur durch Bestrahlung erzeugte Haut bietet demnach ausreichende Festigkeit, um die dadurch eingefrorene Kontur der Vergussmasse auch unter den Bedingungen einer Warmhärtung beizubehalten.

## Patentansprüche

1. Warmhärtende und lichtfixierbare, bei Raumtemperatur flüssige Masse auf Epoxidbasis, insbesondere zur Fixierung und/oder Verkapselung von elektrischen und elektronischen Bauteilen auf einem Substrat, mit
mindestens einer epoxidhaltigen Verbindung (A) mit mindestens zwei Epoxidgruppen;
mindestens einem Härter (B) für die epoxidhaltige Verbindung;
wahlweise einem Beschleuniger (C);
mindestens einer strahlungshärtenden Komponente (D);
mindestens einem Photoinitiator (E) für die radikalische Polymerisation; mindestens einem Füllstoff (F); und
wahlweise weiteren Zusätzen (G);
**dadurch gekennzeichnet, dass** die strahlungshärtende Komponente (D) mindestens ein mindestens trifunktionelles (Meth)acrylat umfasst,
wobei die Masse die strahlungshärtende Komponente (D) in einem Anteil von 0.5 bis 5 Gew.-% enthält, bezogen auf das Gesamtgewicht der Masse.

2. Masse nach Anspruch 1, **dadurch gekennzeichnet, dass** die strahlungshärtende Komponente in einem Anteil von höchstens 30 Gew.-% vorliegt, bezogen auf die Summe der Gewichtsanteile der Komponenten (A) bis (E).

3. Masse nach Anspruch 1 oder 2, **dadurch gekennzeichnet, dass** die strahlungshärtende Komponente (D) in einem Anteil von höchstens 25 Gewichtsprozent vorliegt, bezogen auf die Summe der Gewichtsanteile der Komponenten (A) bis (E), bevorzugt von höchstens 20 Gewichtsprozent und besonders bevorzugt von höchstens 15 Gewichtsprozent.

4. Masse nach einem der vorhergehenden Ansprüche, **dadurch gekennzeichnet, dass** der Anteil des mindestens trifunktionellen (Meth)Acrylats am Gesamtgewicht der strahlungshärtenden Komponente (D) mindestens 50 Gew.-% beträgt, bevorzugt mindestens 60 Gew.-%.

5. Masse nach einem der vorhergehenden Ansprüche, **dadurch gekennzeichnet, dass** die epoxidhaltige Verbindung aus der Gruppe der cycloaliphatischen Epoxide, der aromatischen und aliphatischen Glycidylether, Glycidylester und Glycidylamine sowie Mischungen davon ausgewählt ist, wobei die epoxidhaltige Verbindung bevorzugt in einem Anteil, von 2-60 Gew.-% vorliegt, bevorzugt von 4-30 Gew.-% und besonders bevorzugt von 5-20 Gew.-%, jeweils bezogen auf das Gesamtgewicht der Masse.

6. Masse nach einem der vorhergehenden Ansprüche, **dadurch gekennzeichnet, dass** der Härter (B) wenigstens eine Verbindung umfasst, die aus der aus Carbonsäureanhydriden, stickstoffhaltigen Verbindungen, Verbindungen mit zwei oder mehr phenolischen Hydroxylgruppen und Aminophenolen sowie Mischungen davon bestehenden Gruppe ausgewählt ist.

7. Masse nach einem der vorhergehenden Ansprüche, **dadurch gekennzeichnet, dass** der Härter (B) wenigstens ein Carbonsäureanhydrid umfasst, bevorzugt ein aus der Gruppe bestehend aus Anhydriden zweiprotoniger Carbonsäuren und aromatischer vierprotoniger Carbonsäuren sowie Mischungen davon ausgewähltes Carbonsäureanhydrid, besonders bevorzugt ein Carbonsäureanhydrid, das ausgewählt ist aus der Gruppe bestehend aus Methylhexahydrophthalsäureanhydrid (MHHPA), Methyl-endomethylentetrahydrophthalsäureanhydrid (METH, NMA) und hydriertem Methyl-endomethylentetrahydrophthalsäureanhydrid.

8. Masse nach einem der vorhergehenden Ansprüche, **dadurch gekennzeichnet, dass** die Masse das Carbonsäureanhydrid in einem Anteil von 2-60 Gew.-% enthält, bevorzugt von 4-30 Gew.-% und besonders bevorzugt von 5-20 Gew.-%, bezogen auf das Gesamtgewicht der Masse.

9. Masse nach einem der vorhergehenden Ansprüche, **dadurch gekennzeichnet, dass** das mindestens trifunktionelle (Meth)acrylat eine oder mehrere der folgenden Verbindungen umfasst:
a) einen (Meth)acrylsäureester von mindestens dreiwertigen Alkoholen, bevorzugt von Glycerin, Trimethylolpropan, Ditrimethylolpropan, Pentaerythritol, Dipentaerythritol, Tris(hydroxyethyl)isocyanurat oder alkoxylierten Derivaten davon,
b) eine dendrimere Verbindung mit terminal auf einem dendrimeren Rest angeordneten (Meth)acrylatgruppen,
c) eine mehrfach verzweigte (Meth)acrylathaltige Verbindung, und/oder
d) ein Urethan(meth)acrylat eines mehrwertigen Alkohols, ein (Meth)Acrylamid eines mehrwertigen Amins oder ein Epoxy(meth)acrylat.

10. Masse nach einem der vorhergehenden Ansprüche, **dadurch gekennzeichnet, dass** der Photoinitiator durch aktinische Strahlung einer Wellenlänge von 200 bis 500 nm aktivierbar ist und in einem Anteil von 0,01-5 Gew.-%, bevorzugt in einem Anteil von weniger als 2 Gew.-%, besonders bevorzugt weniger als 1 Gew.-%, bezogen auf das Gesamtgewicht der Masse, vorliegt.

11. Masse nach einem der vorhergehenden Ansprüche, bestehend aus
(A) 2-60 Masseanteilen der mindestens difunktionellen epoxidhaltigen Verbindung;
(B) 2-60 Massenanteilen des Härters für die epoxidhaltige Verbindung;
(C) 0-5 Massenanteilen eines Beschleunigers;
(D) 0.5-5 Massenanteilen der strahlungshärtenden Komponente (D), die mindestens ein mindestens trifunktionelles (Meth)Acrylat umfasst
(E) 0.01-5 Massenanteilen des Photoinitiators
(F) 1-90 Massenanteilen des mindestens einen Füllstoffs
(G) 0 - 15 Massenanteilen eines oder mehrerer Zusatzstoffe;
wobei die Summe aller Massenanteile 100 ergibt.

12. Masse nach einem der vorhergehenden Ansprüche, **dadurch gekennzeichnet, dass** die Masse als Einkomponentenmasse oder als Zweikomponentenmasse formuliert ist.

13. Masse nach einen der vorhergehenden Ansprüche, **dadurch gekennzeichnet, dass** die Masse zumindest eine der folgenden Eigenschaften aufweist:
a) einen thermischen Ausdehnungskoeffizienten, der im Vergleich zu dem thermischen Ausdehnungskoeffizient einer entsprechenden Masse ohne die Komponenten (D) und (E), jedoch mit gleichem Füllgrad, höchstens verdoppelt ist,
b) einen Glasübergangspunkt Tg von mindestens 150 °C, bestimmt wie in der Beschreibung angegeben
c) eine DSC-Endsettemperatur, die höchstens 10 °C über der DSC-Endsettemperatur einer entsprechenden Masse ohne die Komponenten (D) und (E), jedoch mit gleichem Füllgrad, liegt.

14. Verwendung der Masse gemäß einem der Ansprüche 1 bis 13 zum Fixieren und/oder selektiven Verkapseln von elektrischen, elektronischen und/oder elektromechanischen Bauteilen, bevorzugt von Bauteilen auf Leiterplatten, und/oder zum Verkleben, Beschichten und Abdichten.

15. Verfahren zum selektiven Verkapseln eines Bauteils auf einem Substrat, bei dem
ein Substrat mit mehreren Bauteilen bereitgestellt wird;
wenigstens ein erstes Bauteil aus den mehreren Bauteilen ausgewählt und die Masse gemäß einem der Ansprüche 1 bis 13 auf das erste Bauteil dosiert wird;
die auf das erste Bauteil dosierte Masse durch Bestrahlen mit aktinischer Strahlung fixiert wird und die fixierte Masse anschließend warmgehärtet wird.

16. Verfahren nach Anspruch 15, welches die folgenden Schritte umfasst:
a) Selektives Dosieren der Masse auf das erste Bauteil;
b) Fixierung der Masse auf dem ersten Bauteil durch Bestrahlung der Masse;
c) Selektives Dosieren der Masse auf ein zweites Bauteil;
d) Fixierung der Masse auf dem zweiten Bauteil durch Bestrahlung der Masse;
e) Wahlweise Wiederholen der Schritte c) und d) auf weiteren ausgewählten Bauteilen; und
f) Anschließendes Warmhärten der fixierten Masse.

17. Verfahren zum selektiven Verkapseln eines oder mehrerer Bauteile auf einem Substrat nach Anspruch 15, welches die folgenden Schritte umfasst:
a) Dosieren einer Masse gemäß einem der Ansprüche 1 bis 13 auf ein erstes ausgewähltes Bauteil und/oder eine Bauteilgruppe;
b) Fixieren der Masse auf dem ersten ausgewählten Bauteil und/oder der Bauteilgruppe durch Bestrahlung der Masse;
c) Dosieren eines Dammes um das erste Bauteil und/oder eine Bauteilgruppe herum, unter Bildung einer von dem Damm umschlossenen Kavität;
d) Füllen der Kavität mit einer warmhärtenden Masse;
e) Warmhärten der Masse, des Damms und der warmhärtenden Masse;
wobei für das Dosieren des Damms und/oder das Füllen der Kavität bevorzugt eine Masse gemäß den Ansprüchen 1 bis 13 verwendet wird und der Damm vor Schritt d) und/oder die warmhärtende Masse in der Kavität nach Schritt d) durch Bestrahlung fixiert wird.

## Claims

1. A heat-curing and light-fixable epoxy-based composition which is liquid at room temperature, in particular for the fixation and/or encapsulation of electrical and electronic parts on a substrate, comprising
at least one epoxy-containing compound (A) having at least two epoxy groups;
at least one curing agent (B) for the epoxy-containing compound;
optionally an accelerator (C);
at least one radiation-curing component (D);
at least one photoinitiator (E) for radical polymerization;
at least one filler (F); and
optionally further additives (G);
**characterized in that** the radiation-curing component (D) comprises at least one at least trifunctional (meth)acrylate,
the composition containing the radiation-curing component (D) in a proportion of 0.5 to 5 weight percent, based on the total weight of the composition.

2. The composition according to claim 1, **characterized in that** the radiation-curing component is present in a proportion of at most 30 weight percent, based on the sum of the weight proportions of the components (A) to (E).

3. The composition according to claim 1 or 2, **characterized in that** the radiation-curing component (D) is present in a proportion of at most 25 weight percent, based on the sum of the weight proportions of the components (A) to (E), preferably at most 20 weight percent and particularly preferably at most 15 weight percent.

4. The composition according to any of the preceding claims, **characterized in that** the proportion of the at least trifunctional (meth)acrylate of the total weight of the radiation-curing component (D) is at least 50 weight percent, preferably at least 60 weight percent.

5. The composition according to any of the preceding claims, **characterized in that** the epoxy-containing compound is selected from the group of cycloaliphatic epoxides, aromatic and aliphatic glycidyl ethers, glycidyl esters and glycidyl amines and mixtures thereof, wherein the epoxy-containing compound is preferably present in a proportion of 2-60 weight percent, preferably 4-30 weight percent and particularly preferably 5-20 weight percent, each based on the total weight of the composition.

6. The composition according to any of the preceding claims, **characterized in that** the curing agent (B) comprises at least one compound selected from the group consisting of carboxylic acid anhydrides, nitrogen-containing compounds, compounds having two or more phenolic hydroxyl groups and aminophenols and mixtures thereof.

7. The composition according to any of the preceding claims, **characterized in that** the curing agent (B) comprises at least one carboxylic acid anhydride, preferably a carboxylic acid anhydride selected from the group consisting of anhydrides of two-proton carboxylic acids and aromatic four-proton carboxylic acids and mixtures thereof, particularly preferably a carboxylic acid anhydride selected from the group consisting of methylhexahydrophthalic acid anhydride (MHHPA), methylendomethylene tetrahydrophthalic acid anhydride (METH, NMA) and hydrogenated methylendomethylene tetrahydrophthalic acid anhydride.

8. The composition according to any of the preceding claims, **characterized in that** the composition contains the carboxylic acid anhydride in a proportion of 2-60 weight percent, preferably 4-30 weight percent and particularly preferably 5-20 weight percent, based on the total weight of the composition.

9. The composition according to any of the preceding claims, **characterized in that** the at least trifunctional (meth)acrylate comprises one or more of the following compounds:
(a) a (meth)acrylic acid ester of at least trihydric alcohols, preferably glycerol, trimethylolpropane, di-trimethylolpropane, pentaerythritol, dipentaerythritol, tris(hydroxyethyl)isocyanurate or alkoxylated derivatives thereof;
(b) a dendrimeric compound having (meth)acrylate groups terminally arranged on a dendrimeric residue;
(c) a polybranched (meth)acrylate-containing compound, and/or
(d) a urethane (meth)acrylate of a polyhydric alcohol, a (meth)acrylamide of a polyvalent amine or an epoxy(meth)acrylate.

10. The composition according to any of the preceding claims, **characterized in that** the photoinitiator is activatable by actinic radiation of a wavelength ranging from 200 to 500 nm and is present in a proportion of 0.01-5 weight percent, preferably in a proportion of less than 2 weight percent, particularly preferably less than 1 weight percent, based on the total weight of the composition.

11. The composition according to any of the preceding claims, consisting of
(A) 2-60 mass fractions of the at least bifunctional epoxy-containing compound;
(B) 2-60 mass fractions of the curing agent for the epoxy-containing compound;
(C) 0-5 mass fractions of an accelerator;
(D) 0.5-5 mass fractions of the radiation-curing component (D) comprising at least one at least trifunctional (meth)acrylate;
(E) 0.01-5 mass fractions of the photoinitiator;
(F) 1-90 mass fractions of the at least one filler;
(G) 0-15 mass fractions of one or more additives;
with the sum of all mass fractions totaling 100.

12. The composition according to any of the preceding claims, **characterized in that** the composition is formulated as a one-part composition or as a two-part composition.

13. The composition according to any of the preceding claims, **characterized in that** the composition has at least one of the following properties:
(a) a coefficient of thermal expansion which, as compared to the coefficient of thermal expansion of a corresponding composition without the components (D) and (E), but with the same filling level, is at most doubled;
(b) a glass transition point Tg of at least 150 °C, determined as indicated in the description;
(c) a DSC endset temperature which is at most 10 °C above the DSC endset temperature of a corresponding composition without the components (D) and (E), but with the same filling level.

14. A use of the composition according to any of claims 1 to 13 for fixing and/or selectively encapsulating electrical, electronic and/or electromechanical component parts, preferably component parts on circuit boards, and/or for bonding, coating and sealing.

15. A method of selectively encapsulating a component part on a substrate,
wherein
a substrate having several component parts is provided;
at least a first component part is selected from the several component parts and the composition according to any of claims 1 to 13 is dosed onto the first component part;
the composition dosed on the first component part is fixed by irradiation with actinic radiation and the fixed composition is then heat-cured.

16. The method according to claim 15, comprising the following steps:
(a) selectively dosing the composition onto the first component part;
(b) fixing the composition on the first component part by irradiation of the composition;
(c) selectively dosing the composition onto a second component part;
(d) fixing the composition on the second component part by irradiation of the composition;
(e) optionally repeating steps (c) and (d) on further selected component parts; and
(f) subsequently heat-curing the fixed composition.

17. The method of selectively encapsulating one or more component parts on a substrate according to claim 15, comprising the following steps:
(a) dosing a composition according to any of claims 1 to 13 onto a first selected component part and/or a group of component parts;
(b) fixing the composition on the first selected component part and/or the group of component parts by irradiation of the composition;
(c) dosing a dam around the first component part and/or a group of component parts to form a cavity surrounded by the dam;
(d) filling the cavity with a heat-curing composition;
(e) heat-curing the composition, the dam and the heat-curing composition,
wherein preferably a composition according to claims 1 to 13 is used to dose the dam and/or fill the cavity, and the dam, prior to step (d), and/or the heat-curing composition in the cavity, after step (d), is/are fixed by irradiation.

## Revendications

1. Masse à base d'époxyde qui est thermodurcissable et fixable par lumière et liquide à température ambiante, en particulier pour la fixation et/ou l'encapsulation d'éléments structurels électriques et électroniques sur un substrat, comportant
au moins un composé (A) contenant de l'époxyde et comprenant au moins deux groupes époxydes ;
au moins un durcisseur (B) pour le composé contenant de l'époxyde ;
en option un accélérateur (C) ;
au moins un composant (D) durcissant par radiation ;
au moins un photo-initiateur (E) pour la polymérisation radicalaire ;
au moins une matière de charge (F) ; et
facultativement d'autres additifs (G) ;
**caractérisée en ce que** le composant (D) durcissant par radiation comprend au moins un (méth)acrylate au moins trifonctionnel,
la masse contenant le composant (D) durcissant par radiation dans une part de 0,5 à 5% en poids par rapport au poids total de la masse.

2. Masse selon la revendication 1, **caractérisée en ce que** le composant durcissant par radiation est présent dans une part de 30% en poids au maximum par rapport à la somme des parts en poids des composants (A) à (E).

3. Masse selon la revendication 1 ou 2, **caractérisée en ce que** le composant (D) durcissant par radiation est présent dans une part de 25 pour cent en poids au maximum par rapport à la somme des parts en poids des composants (A) à (E), de préférence de 20 pour cent en poids au maximum et de manière particulièrement préférée de 15 pour cent en poids au maximum.

4. Masse selon l'une des revendications précédentes, **caractérisée en ce que** la part du (méth)acrylate au moins trifonctionnel dans le poids total du composant (D) durcissant par radiation est égale à au moins 50% en poids, de préférence égale à au moins 60% en poids.

5. Masse selon l'une des revendications précédentes, **caractérisée en ce que** le composé contenant de l'époxyde est choisi dans le groupe des époxydes cycloaliphatiques, des éthers glycidyliques aromatiques et aliphatiques, des éthers glycidyliques et des amines glycidyliques et de leurs mélanges, le composé contenant de l'époxyde étant présent de préférence dans une part de 2 à 60% en poids, de préférence de 4 à 30% en poids, et de manière particulièrement préférée de 5 à 20% en poids, respectivement par rapport au poids total de la masse.

6. Masse selon l'une des revendications précédentes, **caractérisée en ce que** le durcisseur (B) comprend au moins un composé qui est choisi dans le groupe constitué d'anhydrides d'acide carboxylique, de composés azotés, de composés comprenant deux groupes hydroxyles phénoliques ou plus, et d'aminophénols ainsi que de leurs mélanges.

7. Masse selon l'une des revendications précédentes, **caractérisée en ce que** le durcisseur (B) comprend au moins un anhydride d'acide carboxylique, de préférence un anhydride d'acide carboxylique choisi dans le groupe constitué d'anhydrides d'acides carboxyliques diphotoniques et d'acides carboxyliques tétraprotoniques aromatiques, et de leurs mélanges, de manière particulièrement préférée un anhydride d'acide carboxylique qui est choisi dans le groupe constitué d'anhydride méthylhexahydrophtalique (MHHPA), d'anhydride méthyl endométhylène tétrahydrophtalique (METH, NMA) et d'anhydride méthyl endométhylène tétrahydrophtalique hydrogéné.

8. Masse selon l'une des revendications précédentes, **caractérisée en ce que** la masse contient l'anhydride d'acide carboxylique dans une part de 2 à 60% en poids, de préférence de 4 à 30% en poids, et de manière particulièrement préférée de 5 à 20% en poids par rapport au poids total de la masse.

9. Masse selon l'une des revendications précédentes, **caractérisée en ce que** le (méth)acrylate au moins trifonctionnel comprend un ou plusieurs des composés suivants :
a) un ester d'acide (méth)acrylique d'alcools au moins trihydriques, de préférence de glycérol, de triméthylolpropane, de ditriméthylolpropane, de pentaérythritol, de dipentaérythritol, de tris(hydroxyéthyl)isocyanurate ou de leurs dérivés alcoxylés,
b) un composé dendrimère comprenant des groupes (méth)acrylate disposés de façon terminale sur un résidu dendrimère,
c) un composé contenant du (méth)acrylate à ramifications multiples, et/ou
d) un (méth)acrylate d'uréthane d'un alcool polyhydrique, un (méth)acrylamide d'une amine polyvalente ou un (méth)acrylate d'époxyde.

10. Masse selon l'une des revendications précédentes, **caractérisée en ce que** le photo-initiateur est apte à être activé par un rayonnement actinique de longueur d'onde de 200 à 500 nm et est présent dans une part de 0,01 à 5% en poids, de préférence dans une part inférieure à 2% en poids, de manière particulièrement préférée inférieure à 1% en poids par rapport au poids total de la masse.

11. Masse selon l'une des revendications précédentes, composée de
(A) 2 à 60 parts en masse du composé contenant de l'époxyde au moins difonctionnel ;
(B) 2 à 60 parts en masse du durcisseur pour le composé contenant de l'époxyde ;
(C) 0 à 5 parts en masse d'un accélérateur ;
(D) 0,5 à 5 parts en masse du composant durcissant (D) par radiation comprenant au moins un (méth)acrylate au moins trifonctionnel ;
(E) 0,01 à 5 parts en masse du photo-initiateur ;
(F) 1 à 90 parts en masse de ladite au moins une matière de charge ;
(G) 0 à 15 parts en masse d'un ou de plusieurs additifs ;
la somme de toutes les parts en masse étant égale à 100.

12. Masse selon l'une des revendications précédentes, **caractérisée en ce que** la masse est formulée sous forme de masse à un composant ou de masse à deux composants.

13. Masse selon l'une des revendications précédentes, **caractérisée en ce que** la masse présente au moins l'une des propriétés suivantes :
a) un coefficient de dilatation thermique qui est au maximum doublé par rapport au coefficient de dilatation thermique d'une masse correspondante sans les composants (D) et (E), mais avec le même taux de remplissage,
b) un point de transition vitreuse Tg d'au moins 150 °C, déterminé comme indiqué dans la description,
c) une température DSC finale supérieure au maximum de 10 °C à la température DSC finale d'une masse correspondante sans les composants (D) et (E), mais avec le même taux de remplissage.

14. Utilisation de la masse selon l'une des revendications 1 à 13 pour la fixation et/ou et l'encapsulation sélective d'éléments structurels électriques, électroniques et/ou électromécaniques, de préférence d'éléments structurels sur des cartes de circuits imprimés, et/ou pour un collage, un revêtement et un étanchement.

15. Procédé d'encapsulation sélective d'un élément structurel sur un substrat, dans lequel
un substrat comprenant une pluralité d'éléments structurels est fourni ;
au moins un premier élément structurel est choisi parmi la pluralité d'éléments structurels, et la masse selon l'une des revendications 1 à 13 est dosée sur le premier élément structurel ;
la masse dosée sur le premier élément structurel est fixée par irradiation avec un rayonnement actinique et la masse fixée est ensuite durcie par voie thermique.

16. Procédé de la revendication 15, comprenant les étapes suivantes :
a) dosage sélectif de la masse sur le premier élément structurel ;
b) fixation de la masse sur le premier élément structurel par irradiation de la masse ;
c) dosage sélectif de la masse sur un deuxième élément structurel ;
d) fixation de la masse sur le deuxième élément structurel par irradiation de la masse ;
e) répétition facultative des étapes c) et d) sur d'autres éléments structurels choisis ; et
f) durcissement thermique ultérieur de la masse fixée.

17. Procédé d'encapsulation sélective d'un ou de plusieurs éléments structurels sur un substrat selon la revendication 15, comprenant les étapes suivantes :
a) dosage d'une masse selon l'une des revendications 1 à 13 sur un premier élément structurel choisi et/ou un groupe d'éléments structurels ;
b) fixation de la masse sur le premier élément structurel choisi et/ou le groupe d'éléments structurels par irradiation de la masse ;
c) dosage d'un barrage autour du premier élément structurel et/ou d'un groupe d'éléments structurels en formant une cavité enfermée par le barrage ;
d) remplissage de la cavité d'une masse thermodurcissable ;
e) durcissement de la masse, du barrage et de la masse thermodurcissable par voie thermique ;
dans lequel pour le dosage du barrage et/ou le remplissage de la cavité, une masse selon les revendications 1 à 13 est de préférence utilisée et le barrage est fixé par irradiation avant l'étape d) et/ou la masse thermodurcissable dans la cavité est fixée par irradiation après l'étape d).
